# EUROPEAN PATENT APPLICATION

(11) **EP 4 548 827 A1**
(43) Date of publication of application: **07.05.2025**
(21) Application number: 23835664.6
(22) Date of filing: 26.04.2023
(51) Int. Cl.: A47L 9/28, A47L 5/24, A47L 7/00, H02J 9/00

(54) **METHOD FOR ACTIVATING BATTERY-POWERED CLEANER BODY BY COUNTER-ELECTROMOTIVE FORCE, AND WIRELESS CLEANER DEVICE EMPLOYING SAME**

(30) Priority: 08.07.2022 KR 20220084621; 20.01.2023 KR 20230009021
(71) Applicant: Samsung Electronics Co., Ltd., Suwon-si, Gyeonggi-do 16677 (KR)
(72) Inventor: LEE, Seongu, Suwon-si, Gyeonggi-do 16677 (KR); KIM, Seehyun, Suwon-si, Gyeonggi-do 16677 (KR); PARK, Sanghyuk, Suwon-si, Gyeonggi-do 16677 (KR); PARK, Seho, Suwon-si, Gyeonggi-do 16677 (KR); LEE, Yeongju, Suwon-si, Gyeonggi-do 16677 (KR); JEONG, Jaeshik, Suwon-si, Gyeonggi-do 16677 (KR); CHO, Jeonghee, Suwon-si, Gyeonggi-do 16677 (KR)
(74) Representative: Walaski, Jan Filip
(86) International application number: PCT/KR2023/005668
(87) International publication number: WO 2024/010195

(57) **Abstract**

Provided are, as a method of minimizing power consumption in a cordless cleaner, a method of activating a cleaner body by using, as a wake-up signal, back-electro motive force (BEMF) generated by rotation of a suction fan on the cleaner body when a dust suction motor on a station operates while a connection between a battery and a controller of the cleaner body is released and battery charging is also stopped in the station, and an electrical device employing the method.

## Description

### Technical Field

An embodiment of the disclosure relates to a method of electrically activating one of two devices through back-electro motive force (BEMF) when the two devices including motors are coupled or connected through a flow path, and a device employing the method.

### Background Art

A cordless cleaner is a type of vacuum cleaner that charges and uses a battery built in the vacuum cleaner itself without having to connect a wire to an outlet. The cordless cleaner includes a suction motor that generates suction power, and may suck up foreign substances such as dust along with air from a vacuum cleaner head (brush) through the suction power generated by the suction motor, separate the sucked up foreign substances from the air, and collect the dust.

Compared to corded vacuum cleaners, cordless cleaners are very convenient to use because they do not connect power lines. That is why cordless cleaners are becoming popular. However, use of cordless cleaners is becoming increasingly diverse according to users and environmental conditions. Recently, cordless cleaners for coupling a station (dust discharger) that automatically empties dust from a dust bin attached to a cordless cleaner body when docking with the station have been also used, and the use, methods, and structures of cordless cleaners have become very diverse.

At this time, the cordless cleaner body is cordlessly powered by a battery. The cleaner body provides various display functions in addition to a cleaning function, and thus, continuous battery charging is required. However, when a battery is charged frequently, the battery life decreases, and thus, it is necessary to charge the battery efficiently while performing functions of the cleaner body smoothly.

### Disclosure

### Technical Solution

According to an embodiment of the disclosure, a cordless cleaner device includes a cordlessly powered cleaner body including a first motor and a battery configured to supply power to a main processor, a station including a second motor driven based on a second motor driving event, and a station processor configured to control the second motor to be driven according to the second motor driving event, and a flow path shared by the cleaner body and the station, wherein back-electro motive force (BEMF) is generated in the first motor by rotation of a suction fan connected to the first motor according to an air flow of the flow path by the driving of the second motor, the main processor is activated by the BEMF, and the first motor and the second motor each include a suction motor.

According to an embodiment of the disclosure, a method of electrically activating a battery-powered cordless cleaner device includes, by a station processor, detecting a second motor driving event in a station, by the station processor, driving a second motor according to the second motor driving event, rotating a suction fan of a first motor in a cleaner body by a pressure difference generated in a flow path shared between the cleaner body and the station according to the driving of the second motor, waking up a battery processor of the cleaner body by BEMF generated by rotation of the suction fan of the first motor, and by the battery processor, activating a main processor of the cleaner body powered by a battery of the cleaner body.

### Description of Drawings

FIG. 1 is a diagram of a cordless cleaner in which a station and a cleaner body are coupled, according to an embodiment of the disclosure.
FIG. 2 is a diagram illustrating displaying information on a cleaner body, according to an embodiment of the disclosure.
FIGS. 3A and 3B are graphs showing battery compensation charging of a cordless cleaner.
FIG. 4 is a diagram for explaining a station and a cleaner body, according to an embodiment of the disclosure.
FIG. 5 is a diagram for explaining a cleaner body according to an embodiment of the disclosure.
FIG. 6 is a diagram illustrating a communication connection structure between internal components of a cleaner body, according to an embodiment of the disclosure.
FIG. 7 is a flowchart illustrating an operation of a cordless cleaner, according to an embodiment of the disclosure.
FIG. 8 is a schematic diagram illustrating generating back-electro motive force (BEMF) according to an embodiment of the disclosure.
FIG. 9 is a flowchart illustrating an operation of supplying power to a device operating cordlessly according to BEMF generated in another motor by driving one motor, according to an embodiment of the disclosure.
FIG. 10 is a diagram illustrating an operation of a cordless cleaner through a flow path, according to an embodiment of the disclosure.
FIG. 11 illustrates a robot cleaner device as a cordless cleaner device that generates BEMF in another motor by driving one motor, according to an embodiment of the disclosure.
FIG. 12A is a block diagram illustrating activating a cleaner body by BEMF, according to an embodiment of the disclosure.
FIG. 12B is a block diagram illustrating activating a cleaner body by BEMF, according to an embodiment of the disclosure.
FIG. 13A is a sequence diagram illustrating waking up a battery by BEMF, according to an embodiment of the disclosure.
FIG. 13B is a sequence diagram illustrating waking up a battery by BEMF, according to an embodiment of the disclosure.
FIG. 14 is a circuit diagram illustrating waking up a battery by generation of BEMF, according to an embodiment of the disclosure.
FIG. 15 is a BEMF current waveform diagram according to an embodiment of the disclosure.
FIG. 16 is a circuit diagram illustrating an operation of stopping a first suction motor, according to an embodiment of the disclosure.
FIG. 17 is a waveform diagram illustrating a duty ratio of lower switches of an inverter for stopping a first suction motor, according to an embodiment of the disclosure.
FIG. 18 is a waveform diagram illustrating adjusting a duty ratio of lower switches of an inverter, according to an embodiment of the disclosure.
FIG. 19 is a waveform diagram illustrating a cycle in which compensation charging of a cordless cleaner is performed in a standby mode, according to an embodiment of the disclosure.
FIG. 20 is a waveform diagram illustrating before and after improvement of a compensation charging cycle of a cordless cleaner in a standby mode, according to an embodiment of the disclosure.

### Mode for Invention

Hereinafter, the terms used herein will be briefly described, and then, an embodiment of the disclosure will be described in detail.

The terms used herein are those general terms currently widely used in the art in consideration of functions in regard to an embodiment of the disclosure, but the terms may vary according to the intention of those of ordinary skill in the art, precedents, or new technology in the art. In addition, in a specific case, the applicant voluntarily may select terms, and in this case, the meanings of the terms are disclosed in corresponding description parts of embodiments of the disclosure. Thus, the terms used herein have to be defined based on the meanings of the terms together with the description throughout the disclosure.

Throughout the disclosure, the expression "at least one of a, b or c" indicates only a, only b, only c, both a and b, both a and c, both b and c, all of a, b, and c, or variations thereof.

Throughout the disclosure, when a certain part "includes" or "comprises" a certain component, unless there is a particular description contrary thereto, the part may further include or comprise other components, not excluding the other components. In addition, terms such as "..er/or" and "module" used herein refer to units that perform at least one function or operation, and the units may be implemented as hardware or software or as a combination of hardware and software.

An embodiment of the disclosure will now be described in detail with reference to accompanying drawings to be readily practiced by those of ordinary skill in the art. An embodiment of the disclosure may, however, be embodied in many different forms and should not be construed as limited to the embodiments set forth herein. Also, in order to clearly describe an embodiment of the disclosure, parts not related to description are omitted in the drawings, and like reference numerals in the drawings denote like parts throughout the disclosure.

According to an embodiment of the disclosure, there is a need for a method of charging a controller 1100 of a cleaner body 1000 by a wake-up event that temporarily enables charging while the controller 1100 of the cleaner body 1000 is electrically insulated from a battery 150 and a station 2000 in charge of charging to minimize power loss of a cordless cleaner 3000, and the cordless cleaner 3000 employing the method. In addition, the method may reduce power consumption of the cordless cleaner 3000 and extend the battery life.

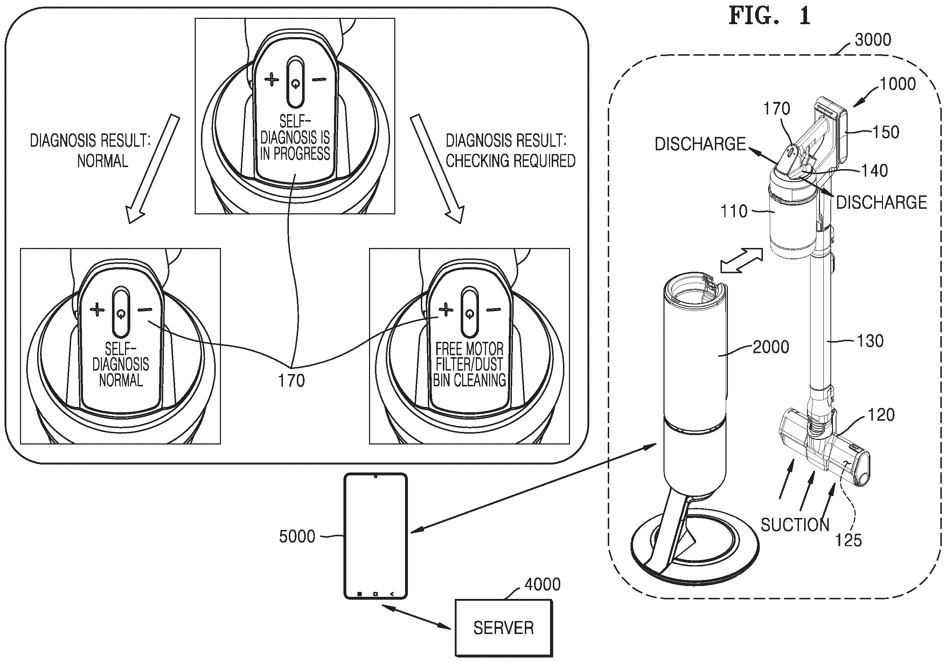

FIG. 1 is a diagram of a cordless cleaner in which a station and a cleaner body are coupled according to an embodiment of the disclosure.

Referring to FIG. 1, the cordless cleaner 3000 in which the station 2000 and the cleaner body 1000 are coupled according to an embodiment of the disclosure may be a stick-type vacuum cleaner including the cleaner body 1000, a brush device 120, and an extension tube 130. The cordless cleaner 3000 according to an embodiment of the disclosure may be a hand-type vacuum cleaner including the cleaner body 1000 and the brush device 120. The cordless cleaner 3000 according to an embodiment of the disclosure may be a wireless vacuum cleaner including the cleaner body 1000, the brush device 120, an extension tube 130, and the station 2000. The cordless cleaner 3000 according to an embodiment of the disclosure may be a vacuum cleaner that may be selectively used among a hand type, an automatic movable type, and a stick type. The hand-type cleaner, the automatic movable or/and the stick-type cleaner according to an embodiment of the disclosure may be a cordless cleaner.

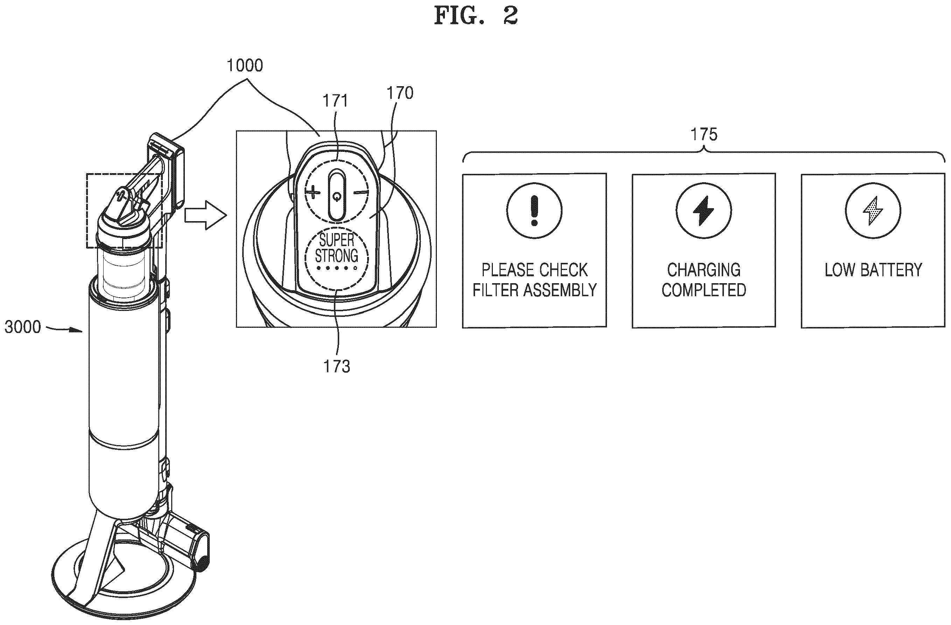

The cleaner body 1000 according to an embodiment of the disclosure is a part that a user may hold and move when cleaning. The cleaner body 1000 may include a dust bin (or dust collector bin) 110 in which foreign substances sucked up from a surface to be cleaned (e.g., a hard floor, a carpet, a mat, etc.), bedding, sofa, etc. are accommodated. The cleaner body 1000 may include a filter unit 140 that filters out ultrafine dust that is not filtered out from the dust bin 110, and discharges air from which the ultrafine dust has been removed to the outside of the cleaner body 1000. The cleaner body 1000 may include a pressure sensor 160 used to detect a value of pressure inside a dust suction flow path (hereinafter, referred to as dust suction flow path pressure). The dust suction flow path of the cleaner body 1000 may represent a period from a position where suction of air including foreign substances starts to a position where air from which foreign substances has been removed is discharged. For example, the dust suction flow path of the cleaner body 1000 may represent a period from a suction port 129 of the brush device 120 to the filter unit 140 of the cleaner body 1000, but is not limited thereto. The cleaner body 1000 may include a battery 150 that supplies power to the cleaner body 1000. The cleaner body 1000 may include a user interface 170 that receives a user input and outputs information about a self-diagnosis result of the cordless cleaner 3000. As shown in FIG. 1, various pieces of information may be displayed on the user interface 170. For example, when a processor of the cleaner body 1000 is performing self-diagnosis, "self-diagnosis is in progress" may be displayed on the user interface 170, and when the self-diagnosis result indicates that measures are necessary, for example, "free motor filter/dust bin cleaning" may be displayed on the user interface 170. Displaying the information through the user interface 170 by the cleaner body 1000 depends on power supplied from the battery 150, and accordingly, the battery 150 of the cleaner body 1000 needs to be charged by a charging circuit 2010 of the station 2000. The information displayed on the cleaner body 1000 is further described with reference to FIG. 2.

FIG. 2 is a diagram illustrating displaying information on a cleaner body according to an embodiment of the disclosure.

Referring to FIG. 2, the cleaner body 1000 of the cordless cleaner 3000 may include a user interface 170, and the user interface 170 may include an input interface 171 through which a command may be input to the cordless cleaner 3000 and an output interface 173 through which the cordless cleaner 3000 displays information to a user. The input interface 171 may be a user input interface capable of touch recognition.

The output interface 173 may be an LCD or an LED display, but is not limited thereto. The output interface 173 may display various information that may show a state of the cordless cleaner 3000 to the user. Referring to FIG. 2, information such as "Please check the filter assembly", "Charging completed", and "Low Battery" may be displayed on the output interface 173.

Because the output interface 173 of the cleaner body 1000 informs the state of the cordless cleaner 3000, the output interface 173 is convenient for the user to obtain information, but this causes power in the cordless cleaner 3000 to be continuously consumed. Because power in the cordless cleaner 3000 is consumed, the battery 150 is discharged, and accordingly, the station 2000 needs to continuously compensate and charge the battery 150 according to a certain cycle. The output interface 173 may provide information such as an operating state or a state of charge of the cordless cleaner 3000, and whether the cordless cleaner 3000 is charged. In particular, even when a screen of the output interface 173 is changed to turn off after charging is completed by mounting the cleaner body 1000 on the station 2000, continuous power consumption in a related circuit (main printed board assembly (PBA)) including an output driver to drive the output interface 173, a detection sensor that detects the cleaner body 1000 being docked on the station 2000, a load, etc. is inevitable.

The reason why the battery 150 provided in the cleaner body 1000 does not completely interrupt power of a main circuit including the user interface 170 of the cleaner body 1000 is that there is a connection operation between the cleaner body 1000 and the station 2000. In other words, power needs to be continuously supplied from the station 2000 to the battery 150 of the cleaner body 1000 in order to perform the connection operation between the cleaner body 1000 and the station 2000.

The station 2000 may mainly perform an automatic/manual dust emptying operation and communication with the cleaner body 1000 via a communication connection (WiFi and BLE). Besides, continuous power consumption occurs in the cleaner body 1000 by performing communication operations between a user terminal 5000 ↔ the station 2000 ↔ the cleaner body 1000, and the connection operation between the cleaner body 1000 and the station 2000. Even after charging is completed by mounting or docking the cleaner body 1000 on the station 2000, power consumption continuously occurs in a related circuit including a driver (LCD driver) which is a driving circuit of the output interface 173, a detection sensor, and a communication interface. Therefore, the power of the battery 150 included in the cleaner body 1000 is continuously supplied to a circuit (e.g., a controller) of the cleaner body 1000, which causes the power of the battery 150 of the cleaner body 1000 to be consumed. As a result, the power consumption of the battery 150 leads to frequent battery charging and compensation charging, which affects the life of the battery 150, causing a situation where a replacement time of the battery 150 is inevitably frequent.

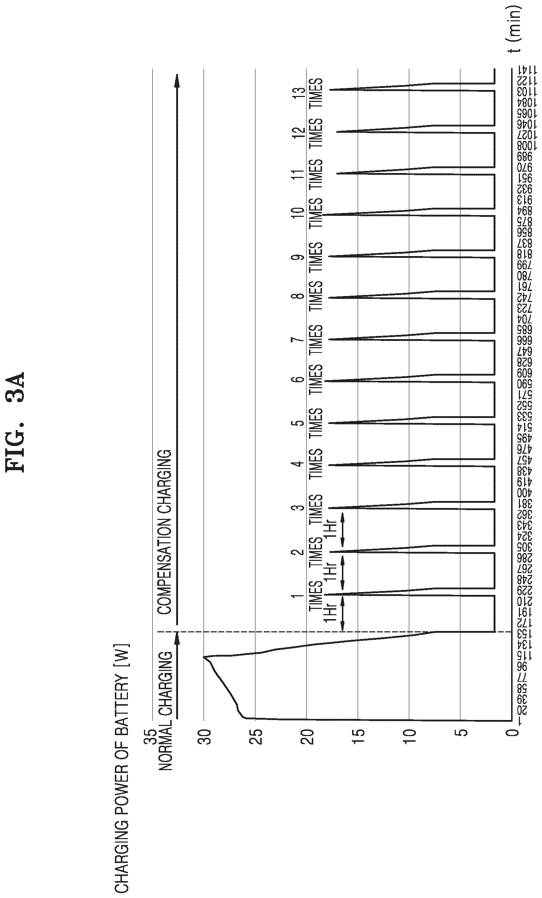

FIG. 3A is a graph showing battery compensation charging of a cordless cleaner.

Referring to FIG. 3A, when the cleaner body 1000 of the cordless cleaner 3000 is coupled to the station 2000, a normal charging cycle occurs in which the battery 150 of the cleaner body 1000 is charged. In FIG. 3A, a period in which the battery 150 is charged for about 2 hours and 30 minutes occurs, and a time length of the normal charging cycle may vary according to the capacity or the magnitude of charging power of the battery 150. Even after the battery 150 provided in the cleaner body 1000 is normally fully charged in the normal charging cycle, the battery 150 is consumed due to power consumption of related circuits such as a controller circuit of the cleaner body 1000 and the user interface 170. The reason why the battery 150 provided in the cleaner body 1000 does not completely interrupt power of a main circuit including the user interface 170 of the cleaner body 1000 is that there is a connection operation between the cleaner body 1000 and the station 2000. In other words, in order to perform the connection operation between the cleaner body 1000 and the station 2000, power needs to be continuously supplied from the station 2000 to the cleaner body 1000, and the battery 150 of the cleaner body 1000 needs to continuously supply power to the cleaner body 1000. For this reason, as shown in FIG. 3A, a compensation charging cycle of the battery 150 is continued even after the normal charging cycle. Referring to FIG. 3A, it may be seen that compensation charging occurs 1 time every about an hour even after the normal charging of the battery 150 due to the continuous power consumption of the cleaner body 1000. This is an example, and a compensation charging cycle may vary depending on setting of a manufacturer.

Here, it should be understood that the cleaner body 1000 of the cordless cleaner 3000 being 'coupled' to the station 2000 includes any forms of coupling in which the cleaner body 1000 may be electrically connected to the station 2000. In other words, it should be understood that the cleaner body 1000 of the cordless cleaner 3000 being 'coupled' to the station 2000 includes all forms of coupling in which the cleaner body 1000 is mounted on the station 2000, and the cleaner body 1000 is electrically coupled to the side or the bottom of the station 2000.

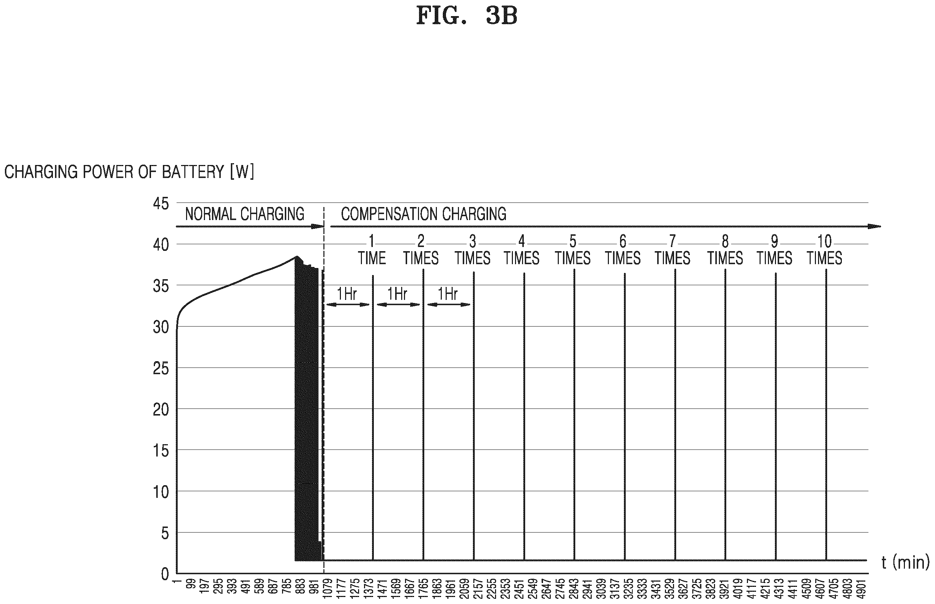

FIG. 3B is a graph showing battery compensation charging of a cordless cleaner.

FIG. 3B shows a different type of battery compensation charging of the cordless cleaner 3000 from the cordless cleaner 3000 of FIG. 3A. However, it may be seen that the cordless cleaner 3000 of FIG. 3B also performs periodic compensation charging every about an hour due to continuous power consumption in the cleaner body 1000 even after the battery 150 of the cleaner body 1000 is fully charged.

Because the cordless cleaner 3000 operates by the battery 150 rather than a power line, battery efficiency-power efficiency are important. Therefore, it is necessary to minimize power loss occurring in the battery 150. When the efficiency of the battery 150 is low, an operation time of the battery 150 is shortened, and this low efficiency leads to frequent charging and compensation charging of the battery 150, which affects a battery life. The shorter battery life leads to frequent battery replacements. In addition, the cordless cleaner 3000 is mostly placed for storage rather than for use (cleaning). Therefore, when the power consumption occurred when the cordless cleaner 3000 is not in use (cleaning) may be minimized, overall battery efficiency may be improved, and potential failure factors of parts may be eliminated. Therefore, it is necessary to improve the overall efficiency by minimizing the power consumption occurred under the condition that the cordless cleaner 3000 is not in use (cleaning).

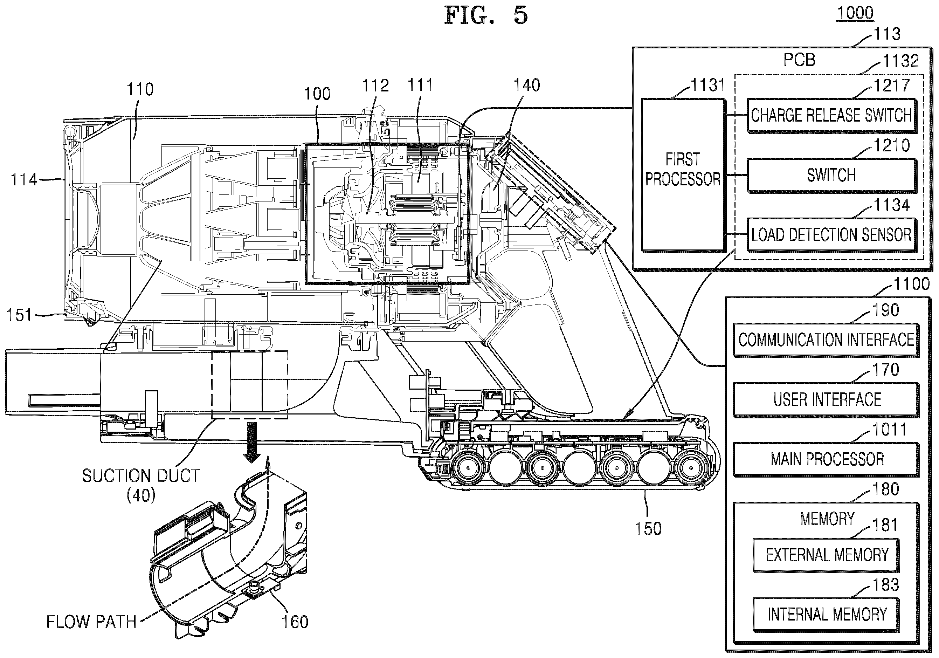

Returning to FIG. 1 again, the remaining configurations of the cordless cleaner 3000 will be described. The cleaner body 1000 according to an embodiment of the disclosure may mount a pressure sensor on a part of a suction duct, but is not limited thereto. For example, the cleaner body 1000 may include more or fewer components than the components shown in FIG. 1. The specific configuration of the cleaner body 1000 will be described in detail with reference to FIG. 5 to be described below.

The brush device 120 according to an embodiment of the disclosure is a device in close contact with a surface to be cleaned and sucking up air and foreign substances from the surface to be cleaned. The brush device 120 may be expressed as a cleaner head. The brush device 120 may be rotatably coupled to the extension tube 130. The brush device 120 may include a motor, a motor controller 125, and a drum having a rotating brush attached thereto, but is not limited thereto. For example, the brush device 120 may further include at least one processor for controlling communication with the cleaner body 1000. The brush device 120 may have various types.

The extension tube 130 may be formed as a pipe or a flexible hose having a certain rigidity. Accordingly, the extension tube 130 may be referred to as a pipe. The extension tube 130 may transfer suction power generated through a first suction motor 111 of the cleaner body 1000 to the brush device 120, and move air and foreign substances sucked up through the brush device 120 to the cleaner body 1000. The extension tube 130 may have a vacuum state according to an operation of the first suction motor 111. The extension tube 130 may be detachably connected to the brush device 120. The extension tube 130 may be formed in multiple steps between the cleaner body 1000 and the brush device 120. Two or more extension tubes 130 may be provided.

The cleaner body 1000, the brush device 120, and the extension tube 130 included in the cordless cleaner 3000 according to an embodiment of the disclosure may include power lines for transferring power supplied from the battery 150 to the cleaner body 1000 and the brush device 120. The cordless cleaner 3000 may supply power to the cleaner body 1000 and the brush device 120 by using power lines.

The cleaner body 1000 according to an embodiment of the disclosure may detect whether the brush device 120 is attached or detached, identify a type of the brush device 120, and adaptively control an operation (e.g., rotations per minute (RPM) of the rotating brush (or the drum) and an RPM of a motor mounted on the brush device 120) of the brush device 120 according to a usage environment state (e.g., a hard floor, a carpet, a mat, a corner, a state being lifted from the surface to be cleaned or a no-load state).

According to an embodiment of the disclosure, in order to determine whether the brush device 120 is not affected by the surface to be cleaned based on a flow path pressure value, the cleaner body 1000 may have a reference value for a pressure value of a dust suction flow path related to a state where the brush device 120 is not affected by the surface to be cleaned. The reference value for the pressure value of the dust suction flow path may be stored in the memory 180, and read or obtained by at least one main processor 1011 and used.

Referring to FIG. 1, a communication system according to an embodiment of the disclosure may include the cordless cleaner 3000, the station 2000, and a server 4000. However, not all of the components shown in FIG. 1 are indispensable components. The communication system may be implemented with more or fewer components than those shown in FIG. 1. For example, the communication system may be implemented to include the cleaner body 1000 and the station 2000, except for the server 4000. In addition, the communication system may be implemented to further include the user terminal 5000. The user terminal 5000 may be a terminal registered in the server 4000 under the same account as the cordless cleaner 3000 or the station 2000. The user terminal 5000 may include, for example, a movable terminal (e.g., a smartphone, a wearable device, and a tablet), a home appliance including a display (e.g., a refrigerator, a TV, a computer, etc.), etc., but is not limited thereto.

The cordless cleaner 3000 may refer to a cordless vacuum cleaner that has the rechargeable battery 150 embedded therein and does not need to connect a power cord to an outlet during cleaning, but is not limited thereto. The cordless cleaner 3000 may include a robot cleaner that automatically performs cleaning while the cleaner body 1000 automatically moves the surface to be cleaned. The user may use a handle mounted on the cleaner body 1000 to allow the brush device (cleaner head) 120 to suck up dust or foreign substances (garbage) from the surface to be cleaned by moving the cleaner body 1000 back and forth. The cordless cleaner 3000 may include a communication interface for performing communication with the station 2000. For example, the cordless cleaner 3000 may transmit and receive data to and from the station 2000 over a wireless personal area network (WPAN).

The station 2000 may be a device for discharging dust collected in the cleaner body 1000, and charging or mounting a battery. The station 2000 may be expressed as a clean station. According to an embodiment of the disclosure, the station 2000 may communicate with the cleaner body 1000 or the server 4000 over a network. For example, the station 2000 may transmit and receive data to and from the cleaner body 1000 over the WPAN that does not use an access point (AP). The station 2000 may transmit and receive data to and from the server 4000 through the AP that connects a local area network (LAN) to which the station 2000 is connected to a wide area network (WAN) to which the server 4000 is connected. For example, the station 2000 may be connected to the cleaner body 1000 through Bluetooth Low Energy (BLE) communication, and may be connected to the server 4000 through Wi-Fi (IEEE 802.11).

Therefore, the station 2000 may serve to relay communication between the cleaner body 1000 and the server 4000 when a Wi-Fi communication module is not provided in the cleaner body 1000. For example, the station 2000 may upload data received from the cleaner body 1000 to the server 4000. In addition, the station 2000 may transmit data received from the server 4000 to the cleaner body 1000.

The server 4000 may be a device for managing the station 2000 and the cleaner body 1000. For example, the server 4000 may be a home appliance management server. The server 4000 may manage user account information and information about home appliance connected to a user account. For example, the user may access the server 4000 through the user terminal 5000 to create the user account. The user account may be identified by an ID and password set by the user. The server 4000 may register the station 2000 and the cleaner body 1000 to the user account according to a determined procedure. For example, the server 4000 may register the station 2000 and the cleaner body 1000 by connecting identification information (e.g., a serial number or a MAC address) of the station 2000 and identification information of the cleaner body 1000 to the user account. When the station 2000 and the cleaner body 1000 are registered to the server 4000, the server 4000 may manage a state of the station 2000 or a state of the cleaner body 1000 by periodically receiving state information of the station 2000 or state information of the cleaner body 1000 from the station 2000.

On the other hand, when software related to the control of the station 2000 or software related to the control of the cleaner body 1000 is updated (hereinafter referred to as upgraded), a new version of software may be registered to a memory of the server 4000. The server 4000 may transmit the new version of software to the station 2000 when a download request for the new version of software is received from the station 2000. Here, the software may be expressed as firmware.

When the new version of software is software related to the control of the station 2000, the station 2000 may update software pre-installed on the station 2000 by downloading the new version of software. According to an embodiment of the disclosure, the software related to the control of the station 2000 may include an algorithm related to a dust discharge operation (process) (e.g., an algorithm to control the strength of suction power of a second suction motor of the station 2000), an algorithm related to an operation of an output interface (e.g., LCD and a sound output unit), an algorithm for diagnosing the state of the station 2000, etc., but is not limited thereto.

In addition, when the new version of software is related to the control of the cleaner body 1000, the station 2000 may update software pre-installed in the cordless cleaner 3000 by transmitting the new version of software to the cordless cleaner 3000. According to an embodiment of the disclosure, the software related to the control of the cleaner body 1000 may include, but is not limited to, an artificial intelligence (AI) model trained to infer the use environment state of the brush device 120, a control algorithm related to an operation mode of the cleaner body 1000 (e.g., an algorithm to control the strength of suction power of the first suction motor 111 of the cleaner body 1000, and an algorithm to control rotations per minute (hereinafter, referred to as drum RPM) of the rotating brush of the brush device 120), an algorithm to diagnose the state (e.g., filter clogging, dust suction flow path clogging, overload of the brush device 120, misassembling, etc.) of the cleaner body 1000, etc.

Therefore, according to an embodiment of the disclosure, even when the cleaner body 1000 does not include a separate communication module (e.g., Wi-Fi communication module) that may communicate directly with the server 4000, the cleaner body 1000 may easily update the pre-installed software in over the air (OTA) method by downloading the new version of software registered to the server 4000 through the station 2000 connected to the server 4000. OTA refers to a technology that wirelessly updates software (firmware) by using Wi-Fi communication without connecting to a computer. OTA may be expressed as an over the network (OTN).

In addition, according to an embodiment of the disclosure, even when the user does not purchase the new cordless cleaner 3000, the convenience of using the cordless cleaner 3000 may be increased by updating a control algorithm or a learning model of the existing cordless cleaner 3000 to the latest version.

The station 2000 downloads the new version of software related to the control of the cordless cleaner 3000 to the cordless cleaner 3000 such that the software of the cordless cleaner 3000 may be updated.

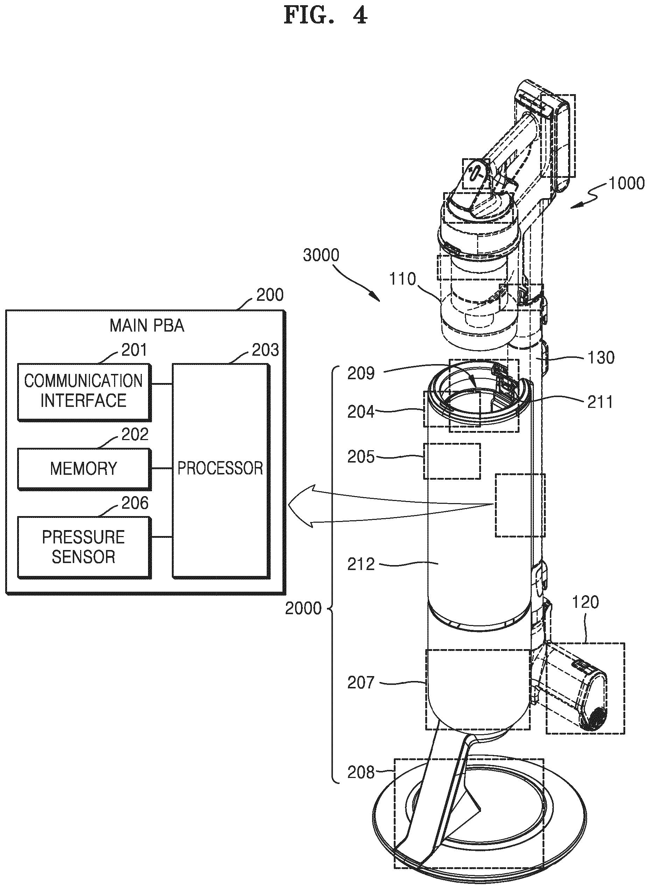

FIG. 4 is a diagram for explaining a station and a cleaner body according to an embodiment of the disclosure.

Referring to FIG. 4, the station 2000 according to an embodiment of the disclosure may include a communication interface 201, a memory 202, a pressure sensor 206, and at least one processor 203. In addition, the station 2000 may further include a user interface 204, a wired connector 205 (e.g., a home appliance smart service (HASS), a second suction motor 207, a power supply device 208, a flow path 209 connected to the dust bin 110 of the cleaner body 1000, a charging terminal 211 for charging the battery 150 of the cleaner body 1000, a dust collector bin coupler, a collector 212, a filter unit, etc. The second suction motor 207 is referred to as a second suction motor 207 to be distinguished from the first suction motor 111 of the cleaner body 1000. Hereinafter, each configuration will now be described.

The station 2000 may include the communication interface 201 for performing communication with an external device. For example, the station 2000 may communicate with the cleaner body 1000 of the cordless cleaner 3000 or the server 4000 through the communication interface 201. At this time, the communication interface 201 may communicate with the server 4000 through a first communication method (e.g., Wi-Fi communication method), and communicate with the cleaner body 1000 through a second communication method (e.g., BLE communication method).

The communication interface 201 may include a short-range wireless communication interface, a long-range wireless communication interface, etc. The short-range wireless communication interface may include a Bluetooth communication interface, a Bluetooth Low Energy (BLE) communication interface, a near field communication (NFC) interface, a WLAN (Wi-Fi) communication interface, a Zigbee communication interface, an Infrared Data Association (IrDA) communication interface, a Wi-Fi Direct (WFD) communication interface, an ultra wideband (UWB) communication interface, and an Ant+ communication interface, but is not limited thereto. The long-range wireless communication interface may be used for the station 2000 to remotely communicate with the server 4000. The long-range wireless communication interface may include the Internet, a computer network (e.g., LAN or WAN), and a movable communication interface. The movable communication interface may include, but is not limited to, a 3^{rd} generation (3G) module, a 4^{th} generation (4G) module, a 5^{th} generation (5G) module, a long term evolution (LTE) module, a narrowband Internet of Things (NB-IoT) module, and an LTE-M module.

The communication interface 201 may transmit data to the at least one processor 203 through a universal synchronous receiver/transmitter (UART), but is not limited thereto.

The memory 202 of the station 2000 may store a program (e.g., one or more commands) for processing and controlling the at least one processor 203, or store input/output data. For example, the memory 202 of the station 2000 may include, but is not limited to, software related to control of the station 2000, state data of the second suction motor 207, a measurement value of the pressure sensor 206, error occurrence data (failure history data), information related to charging of the battery 150 - charging interval, recent compensation charging time data, a charging level of the battery 150 during recent compensation charging - etc. The memory 202 of the station 2000 may store data received from the cleaner body 1000. For example, the memory 202 may store product information (e.g., identification information, model information, etc.) of the cordless cleaner 3000 mounted on the station 2000, version information of software installed in the cordless cleaner 3000, error occurrence data (failure history data) of the cordless cleaner 3000, information related to charging of the battery 150, etc.

The memory 202 may include at least one type of storage medium among a flash memory type, a hard disk type, a multimedia card micro type, card type memory (e.g., a secure digital (SD) or extreme digital (XD) memory), random access memory (RAM), static random access memory (SRAM), read-only memory (ROM), electrically erasable programmable read-only memory (EEPROM), programmable read-only memory (PROM), magnetic memory, a magnetic disk, or an optical disc. Programs stored in the memory 202 may be classified into a plurality of modules according to their functions.

The station 2000 may include the at least one processor 203. The station 2000 may include one processor or a plurality of processors. The at least one processor 203 according to the disclosure may include at least one a central processing unit (CPU), a graphics processing unit (GPU), an accelerated processing unit (APU), a many integrated core (MIC), a digital signal processor (DSP), or a neural processing unit (NPU). The at least one processor 203 may be implemented in the form of an integrated system on chip (SoC) including one or more electronic components. Each of the at least one processor 203 may be implemented as separate hardware (H/W). The at least one processor 203 may be expressed as a micro-computer, a microprocessor computer, or a microprocessor controller (MICOM), a microprocessor unit (MPU), or a microcontroller unit (MCU).

The at least one processor 203 according to the disclosure may be implemented as a single core processor or as a multicore processor.

In an embodiment, the at least one processor 203 may control the second suction motor 207 to be driven based on an event of driving the second suction motor 207. The event of driving the second suction motor 207 may be at least one of an event in which a user pushes a user input button that is the user interface 204, an event in which a control signal is received through communication from the server 4000 or the user terminal 5000 of the user, an event in which a control signal is executed by the program stored in the memory 202 of the station 2000, or an event in which the cleaner body 1000 is electrically coupled to the station 2000. In an embodiment, the event of driving the second suction motor 207 may be an event for emptying the dust bin 110 of the cleaner body 1000. In an embodiment, a control signal for triggering an event by the program stored in the memory 202 of the station 2000 may be periodically executed and generated.

In an embodiment, the cordless cleaner 3000 is a robot cleaner, the cleaner body 1000 is an automatic movable cleaner body, and the event in which the cleaner body 1000 is electrically coupled to the station 2000 may be an event in which the automatic movable cleaner body completes a certain cleaning operation and is docked on and electrically coupled to the station 2000. At this time, an event in which the second suction motor 207 of the station 2000 may be driven by an operation in which the automatic movable cleaner body completes a certain cleaning operation and is docked on and electrically coupled to the station 2000 and the station 2000 automatically moves dust collected in the automatic movable cleaner body toward the station 2000.

In an embodiment, when the second suction motor 207 is driven according to the event of driving the second suction motor 207 to empty the dust bin 110 of the cleaner body 1000, dust collected in the dust bin 110 may move to the collector 212 of the station 2000 through the flow path 209 shared by the cleaner body 1000 and the station 2000. Back-electro motive force (BEMF) may be generated in the first suction motor 111 included in the cleaner body 1000 according to an air flow of the flow path 209 by driving the second suction motor 207 of the station 2000, and the controller 1100 of the cleaner body 1000 may be activated by the generated BEMF. In other words, the BEMF generated in the first suction motor 111 may be a wake-up signal for activating the controller 1100 of the cleaner body 1000. The mechanism by which the BEMF may be generated in the first suction motor 111 included in the cleaner body 1000 according to an air flow of the flow path 209 by driving the second suction motor 207 of the station 2000 is that a pressure difference occurs in the flow path 209 connecting between the cleaner body 1000 and the station 2000 by driving the second suction motor 207 of the station 2000, and the BEMF may be generated in the rotation of a suction fan of the first suction motor 111 by the pressure difference. The generated BEMF may serve as a signal for activating the controller 1100 of the cleaner body 1000.

The user interface 204 of the station 2000 may include an input interface and an output interface. The input interface may include a dust discharge button, a mode selection button, etc., which may be input by the user. The output interface may include an LED, an LCD, a touch screen, etc., but is not limited thereto. The output interface may display a state of charge of the battery 150 of the cleaner body 1000, software update progress information, etc., but is not limited thereto.

The station 2000 may include the wired connector 205 (e.g., HASS). The wired connector 205 may include a terminal for connecting a computing device of a system manager (e.g., a service engineer).

The pressure sensor 206 of the station 2000 may be a sensor for measuring the pressure of the flow path 209 connecting between the station 2000 and the cleaner body 1000. The pressure sensor 206 may measure a pressure value before dust discharging or may measure a pressure value after dust discharging. The pressure sensor 206 may transmit the measured pressure value to the at least one processor 203 through inter integrated circuit (I2C) communication, but is not limited thereto, and may transmit the measured pressure value through other types of communication.

The second suction motor 207 of the station 2000 may be a device that generates suction power for discharging foreign substances collected in the dust bin 110 of the cleaner body 1000 from the cleaner body 1000. The second suction motor 207 may rotate the suction fan for moving air. In an embodiment, the suction fan may include an impeller.

The power supply device 208 may include a switching mode power supply (SMPS) that receives alternating current (AC) power from a power source and converts the AC power into direct current (DC) power. When the cordless cleaner 3000 is mounted (docked) on the station 2000, the DC power converted by the power supply device 208 is supplied to the battery 150 of the cleaner body 1000 through the charging terminal 211, and thus, the battery 150 may be charged.

The charging terminal 211 is connected to a charging terminal 151 of the cleaner body 1000 and used to charge the battery 150 included in the cleaner body 1000. The charging terminal 211 may be connected to the SMPS of the power supply device 208 to provide an electrical connection for charging the battery 150 with the DC power output from the SMPS.

The dust collector bin coupler may be provided such that the dust bin 110 of the cleaner body 1000 is coupled to the station 2000. When the dust bin 110 is seated on the dust collector bin coupler, docking between the cleaner body 1000 and the station 2000 may be completed. The dust collector bin coupler may include a docking detection sensor for detecting docking of the cleaner body 1000. The docking detection sensor may be a tunnel magneto-resistance (TMR) sensor, but is not limited thereto. The TMR sensor may sense whether the cleaner body 1000 is docked by detecting a magnetic material attached to a dust collector bin. The station 2000 may include a step motor that presses one side of a dust bin door 114 to open the dustbin door 114 when the dust bin 110 is docked on the station 2000.

The collector 212 is a space in which foreign substances discharged from the dust bin 110 of the cleaner body 1000 may be collected. The collector 212 may include a dust bag in which foreign substances discharged from the dust bin 110 are collected. The dust bag includes a material through which air is transmitted and foreign substances are not transmitted so that foreign substances introduced from the dust bin 110 to the collector 212 may be collected. The dust bag may be provided detachably from the collector 212. The station 2000 may include an ultraviolet irradiator irradiating ultraviolet rays to the collector 212. The ultraviolet irradiator may include a plurality of ultraviolet ramps.

The filter unit 140 may filter out ultrafine dust which are not collected by the collector 212. The filter unit 140 may include a discharge port through which air having passed through the filter is discharged to the outside of the station 2000. The filter unit 140 may include a motor filter, a HEPA filter, etc., but is not limited thereto.

The cordless cleaner 3000 according to an embodiment of the disclosure may be a stick-type cleaner including the cleaner body 1000, the brush device 120, and the extension tube 130. However, the cordless cleaner 3000 according to an embodiment of the disclosure is not limited to the stick-type cleaner, and the cleaner body 1000 may be an automatic movable cleaner such as a robot cleaner.

Not all of the components shown in FIG. 4 are indispensable components. The cordless cleaner 3000 may be implemented by more or less components than those shown in FIG. 4. For example, the cordless cleaner 3000 may be implemented as the cleaner body 1000 and the brush device 120, except for the extension tube 130.

The cleaner body 1000 is a part that a user may hold and move when cleaning, and the cleaner body 1000 may include the first suction motor 111 that forms vacuum inside the cordless cleaner 3000. The first suction motor 111 may be located in the dust bin 110 in which foreign substances sucked up from a surface to be cleaned (e.g., floor, bedding, sofa, etc.) are accommodated. In addition to the first suction motor 111, the cleaner body 1000 may further include the at least one main processor 1011, the battery 150, and the memory 180 in which software related to control of the cordless cleaner 3000 is stored, but is not limited thereto. The cleaner body 1000 will be described in more detail below with reference to FIG. 5. The cleaner body 1000 may be a body of an automatic movable cleaner that is not limited to the part that the user may hold and move and automatically moves like a robot cleaner. In this case, the cleaner body 1000 may have a space detection sensor that detects a space and a wheel for automatically moving attached to the cleaner body 1000.

The brush device 120 is a device in close contact with the surface to be cleaned and sucking up air and foreign substances from the surface to be cleaned. The brush device 120 may be expressed as a cleaner head. The brush device 120 may be rotatably coupled to the extension tube 130. The brush device 120 may include a motor and a drum having a rotating brush attached thereto, but is not limited thereto. According to an embodiment of the disclosure, the brush device 120 may further include at least one processor for controlling communication with the cleaner body 1000. The brush device 120 may have various types.

The extension tube 130 may be formed as a pipe or a flexible hose having a certain rigidity. The extension tube 130 may transfer suction power generated through the first suction motor 111 of the cleaner body 1000 to the brush device 120, and move air and foreign substances sucked up through the brush device 120 to the cleaner body 1000. The extension tube 130 may be detachably connected to the brush device 120. The extension tube 130 may be formed in multiple steps between the cleaner body 1000 and the brush device 120. Two or more extension tubes 130 may be provided.

According to an embodiment of the disclosure, each of the cleaner body 1000, the brush device 120, and the extension tube 130 included in the cordless cleaner 3000 may include a power line (e.g., a + power line and a - power line) and a signal line.

The power line may be a line for transmitting power supplied from the battery 150 to the cleaner body 1000 and the brush device 120 connected to the cleaner body 1000. The signal line is different from the power line, and may be a line for transmitting and receiving signals between the cleaner body 1000 and the brush device 120. The signal line may be implemented to be connected to the power line within the brush device 120.

According to an embodiment of the disclosure, each of the at least one main processor 1011 of the cleaner body 1000 and the processor of the brush device 120 may perform bidirectional communication between the cleaner body 1000 and the brush device 120 by controlling an operation of a switch device connected to the signal line. Hereinafter, when the cleaner body 1000 and the brush device 120 communicate with each other through the signal line, communication between the cleaner body 1000 and the brush device 120 may be defined as 'signal line communication'. Meanwhile, the cleaner body 1000 and the brush device 120 may communicate with each other by using I2C or UART.

According to an embodiment of the disclosure, the cleaner body 1000 may not only detect whether the brush device 2000 is attached or detached, but also identify a type of the brush device 2000 and adaptively control an operation (e.g., drum RPM) of the brush device 2000 according to a usage environment state (e.g., a hard floor, a carpet, a mat, a corner, a state of being lifted from the surface to be cleaned, etc.) of the brush device 2000. For example, the cleaner body 1000 may transmit a signal for controlling the operation of the brush device 120 to the brush device 120, by periodically communicating with the brush device 120. Hereinafter, the configuration of the cleaner body 1000 will be described in more detail with reference to FIG. 5.

FIG. 5 is a diagram for explaining a cleaner body according to an embodiment of the disclosure.

Referring to FIG. 5, the cleaner body 1000 may include a suction power generating device (hereinafter referred to as a motor assembly 100), the dust bin 110 (also referred to as a dust collector bin) in which foreign substances sucked up from a surface to be cleaned are accommodated, the filter unit 140, the battery 150 that may supply power to the motor assembly 100, the charging terminal 151 connected to the charging terminal 211 of the station 2000 to charge the battery 150 from the station 2000, the pressure sensor 160, the user interface 170, the memory 180, the communication interface 190, the controller 1100 responsible for overall control of the cleaner body 1000, and at least one main processor 1011. However, not all of the components shown in FIG. 5 are indispensable components. The cleaner body 1000 may be implemented by more or fewer components than those shown in FIG. 5. In addition, the at least one main processor 1011 included in the controller 1100 and a first processor 1131 of a printed circuit board (PCB) 113 described below are described separately for convenience of explanation, but both may be implemented as a single processor and divided into a plurality of processors and mounted on the cordless cleaner 3000.

Hereinafter, each configuration will now be described.

The motor assembly 100 may include the first suction motor 111 converting electric force into mechanical rotational force, a fan 112 rotatably connected to the first suction motor 111, and the PCB 113 connected to the first suction motor 111. The first suction motor 111 may form vacuum inside the cordless cleaner 3000. Here, the vacuum means a state lower than atmospheric pressure. The first suction motor 111 may include a brushless direct current (BLDC) motor, but is not limited thereto.

The PCB 113 may include, but is not limited to, a processor (hereinafter referred to as a first processor 1131) that controls the first suction motor 111 and controls communication with the brush device 120, a switch 1210 (e.g.: a field effect transistor (FET), a transistor, an insulated gate bipolar transistor (IGBT), etc.) of an inverter 1200 for controlling power supply to the brush device 120 by pulse width modulation (PWM) switching, a load detection sensor 1134 (e.g., shunt resistor, shunt resistor and amplification circuit (operational amplifier (OP-AMP)), a current detection sensor, and a magnetic field detection sensor (a contactless method, etc.). Hereinafter, for convenience of explanation, the FET will now be described as an example of the switch 1210, and the shunt resistor will now be described as an example of the load detection sensor 1134.

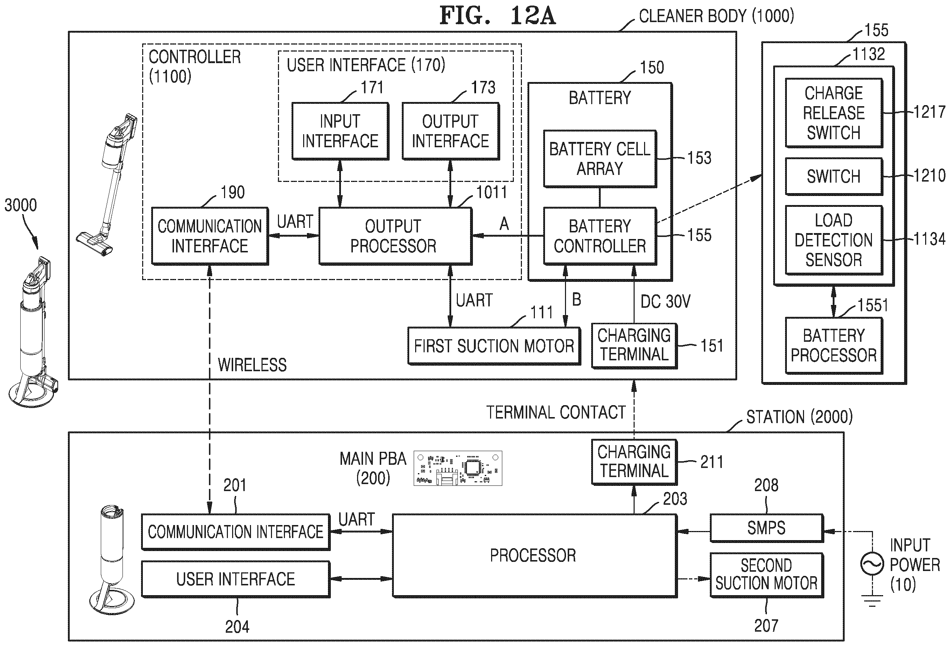

In addition, the PCB 113 may include a charge release switch 1217 for releasing charging between the station 2000 and the cleaner body 1000, the switch 1210 of the inverter 1200, and the load detection sensor 1134. The charge release switch 1217, the switch 1210 and the load detection sensor 1134 may be included in a sub-PCB 1132 separated from the PCB 113 and the sub-PCB 1132 may be located in a battery pack including the battery 150 or may be included in a battery controller 155 which will be described below with reference to FIG. 12A. The battery controller 155 may include a battery processor 1551.

The first processor 1131 may obtain data (hereinafter, referred to as state data) related to a state of the first suction motor 111 and transmit the state data of the first suction motor 111 to the main processor 1011. In addition, the battery processor 1551 included in the battery controller 155 may release charging of the battery 150 by controlling (e.g., turning on or off) an operation of the charge release switch 1217. The first processor 1311 may transmit data indicating a current state of the brush device 120 included in a second signal or data indicating the type of the brush device 120 to the main processor 1011.

The motor assembly 100 may be located in the dust bin 110. The dust bin 110 may be configured such that dust or dirt is filtered out from air introduced through the brush device 120 and collected. The dust bin 110 may be provided detachably from the cleaner body 1000.

The dust bin 110 may collect foreign substances through a cyclone method of separating foreign substances by using centrifugal force. Air from which foreign substances are removed through the cyclone method may be discharged to the outside of the cleaner body 1000, and the foreign substances may be stored in the dust bin 110. A multi-cyclone may be disposed inside the dust bin 110. The dust bin 110 may be provided such that foreign substances are collected at a lower side of the multi-cyclone. The dust bin 110 may include the dust bin door 114 provided to open the dust bin 110 when connected to the station 2000. The dust bin 110 may include a first dust collector in which relatively large foreign substances are firstly collected and a second dust collector in which relatively small foreign substances are secondly collected by the multi-cyclone. Both the first dust collector and the second dust collector may be provided to be opened to the outside when the dust bin door 114 is opened.

The filter unit 140 may filter out ultrafine dust that is not filtered out from the dust bin 110. The filter unit 140 may include a discharge port through which air having passed through a filter is discharged to the outside of the cordless cleaner 3000. The filter unit 140 may include a motor filter, a HEPA filter, etc., but is not limited thereto.

The pressure sensor 160 may measure pressure inside the dust suction flow path (hereinafter, also referred to as dust suction flow path pressure). The pressure sensor 160 provided at a suction end (e.g., a suction duct 40) may measure static pressure to measure a change in a flow speed at the corresponding location. The pressure sensor 160 may be an absolute pressure sensor or a relative pressure sensor. When the pressure sensor 160 is an absolute pressure sensor, the main processor 1011 may sense a first pressure value before operating the first suction motor 111 by using the pressure sensor 160.

The dust suction flow path pressure measured by the pressure sensor 160 may be used to identify a current usage environment state of the brush device 120 (e.g., a state of a surface to be cleaned (a hard floor, a carpet, a mat, a corner, etc.), a state of being lifted from the surface to be cleaned, etc.), or may be used to measure suction power that changes according to a degree of contamination or dust collection of the bin 110.

The pressure sensor 160 may be located at the suction end (e.g., the suction duct 40). The suction duct 40 may be a structure that connects the dust bin 110 to the extension tube 130, or the dust bin 110 to the brush device 120 so that a fluid including foreign substances may move to the dust bin 110. The pressure sensor 160 may be located at the end of a straight portion (or an inflection point of the straight portion and a curved portion) of the suction duct 40 in consideration of contamination of foreign substances/dust, but is not limited thereto. The pressure sensor 160 may be located in the middle of the straight portion of the suction duct 40. On the other hand, when the pressure sensor 160 is located in the suction duct 40, because the pressure sensor 160 is located at a front end of the first suction motor 111 that generates suction power, the pressure sensor 160 may be implemented as a negative pressure sensor.

In the disclosure, a case where the pressure sensor 160 is located in the suction duct 40 is described as an example, but the disclosure is not limited thereto. The pressure sensor 160 may be located at a discharge end (e.g., in the motor assembly 100). When the pressure sensor 160 is located at the discharge end, because the pressure sensor 160 is located at a rear end of the first suction motor 111, the pressure sensor 160 may be implemented as a positive pressure sensor. In addition, a plurality of pressure sensors 160 may be provided in the cordless cleaner 3000.

The battery 150 may be detachably mounted on the cleaner body 1000. The battery 150 may be charged by the station 2000 by electrically connecting the charging terminal 211 provided in the station 2000 to the charging terminal 151 of the cleaner body 1000.

The cleaner body 1000 may include the communication interface 190 for performing communication with an external device. For example, the cleaner body 1000 may communicate with the station 2000 (or the server 4000) through the communication interface 190. The communication interface 190 may include a short-range wireless communication interface, a long-range wireless communication interface, etc. The short-range wireless communication interface may include a Bluetooth communication interface, a BLE communication interface, an NFC interface, a WLAN (Wi-Fi) communication interface, a Zigbee communication interface, an IrDA communication interface, a WFD communication interface, an UWB communication interface, and an Ant+ communication interface, but is not limited thereto.

The user interface 170 may be provided on a part of a handle of the cleaner body 1000. The user interface 170 may include the input interface 171 and the output interface 173. The cleaner body 1000 may receive a user input related to the operation of the cordless cleaner 3000 through the user interface 170, and may output information related to the operation of the cordless cleaner 3000. The input interface 171 may include a power button, a suction power level control button, etc. The output interface 173 may include an LED display, an LCD, a touch screen, etc., but is not limited thereto.

The cleaner body 1000 may include the at least one main processor 1011. The cleaner body 1000 may include one processor or a plurality of processors. For example, the cleaner body 1000 may include the at least one main processor 1011 connected to the user interface 170 and the first processor 1131 connected to the first suction motor 111. The at least one main processor 1011 may control overall operations of the cleaner body 1000 or the cordless cleaner 3000. For example, the main processor 1011 may determine power consumption (strength of suction power) of the first suction motor 111, a drum RPM of the brush device 120, a trip level of the brush device 120, etc.

The at least one processor 1011 according to the disclosure may include at least one of a CPU, a GPU, an APU, a MIC, a DSP, or a NPU. The at least one processor 1001 may be implemented in the form of an integrated SoC including one or more electronic components. The at least one processor 1011 may be expressed as a MICOM, a MPU, or a MCU.

The at least one processor 1011 according to the disclosure may be implemented as a single core processor or as a multicore processor.

The memory 180 may store programs for processing and control of the at least one processor 1011 or may store input/output data. For example, the memory 180 may store a pre-trained Al model (e.g., a support vector machine (SVM) algorithm, etc.), state data of the first suction motor 111, a measurement value of the pressure sensor 160, state data of the battery 150, a compensation charging cycle of the battery 150, the most recent compensation charging time data of the battery 150, state data of the brush device 120, error occurrence data (failure history data), power consumption of the first suction motor 111 corresponding to operating conditions, a RPM of a drum to which a rotating brush is attached, the trip level, etc. The trip level is for preventing overload of the brush device 120 and may mean a reference load value (e.g., a reference current value) for stopping the operation of the brush device 120.

The memory 180 may include an external memory 181 and an internal memory 183. For example, the memory 180 may include at least one type of storage medium among a flash memory type, a hard disk type, a multimedia card micro type, card type memory (e.g., a SD or XD memory), RAM, SRAM, ROM, EEPROM, PROM, magnetic memory, a magnetic disk, or an optical disc. Programs stored in the memory 180 may be classified into a plurality of modules according to their functions.

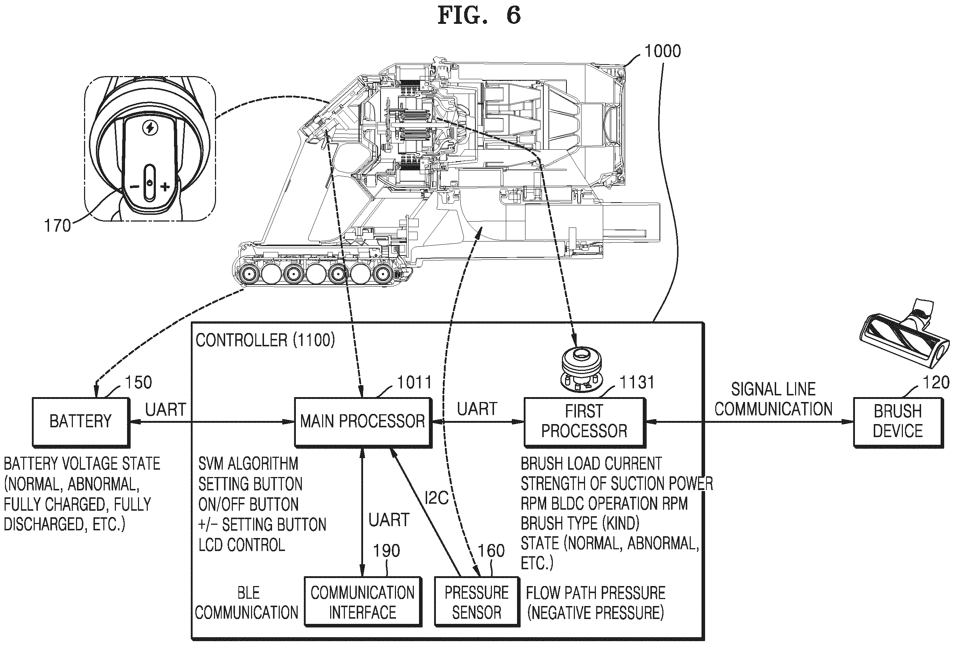

FIG. 6 is a diagram illustrating a communication connection structure between internal components of a cleaner body according to an embodiment of the disclosure.

A communication connection structure between components inside the cleaner body 1000 of the cordless cleaner 3000 according to an embodiment of the disclosure is illustrated. The controller 1100 sucks up dust by receiving power from the battery 150 and controlling the first suction motor 111. At this time, the pressure sensor 160 senses pressure of a flow path through which the dust sucked up by the brush device 120 passes while moving to the dust bin 110.

The controller 1100 may include the at least one main processor 1011. The at least one main processor 1011 may perform UART communication with the communication interface 190, and the communication interface 190 may communicate with an external device or the outside of the controller 1100. The communication interface 190 may perform BLE communication with an external device or the outside of the controller 1100. The at least one main processor 1011 may also receive a pressure sensing value of a dust suction flow path from the pressure sensor 160 through I2C communication. The at least one main processor 1011 may perform UART communication with the first processor 1131 of the PCB 113. The first processor 1131 may control the first suction motor 111 of the cleaner body 1000, obtain data (hereinafter, referred to as state data) related to a state of the first suction motor 111, and transmit the state data of the first suction motor 111 to the main processor 1011 through UART communication. The first processor 1131 may communicate with the brush device 120 through asynchronous communication.

A battery pack including the battery 150 may include the battery controller 155 capable of checking a charge state of the battery 150 and waking up the battery 150 as well as battery cell related control. The at least one main processor 1011 may transmit and receive data to and from the battery controller 155 of the battery 150 through UART communication. In an embodiment, the battery controller 155 may include the battery processor 1551. A detailed configuration of the battery controller 155 will be described below with reference to FIG. 12A.

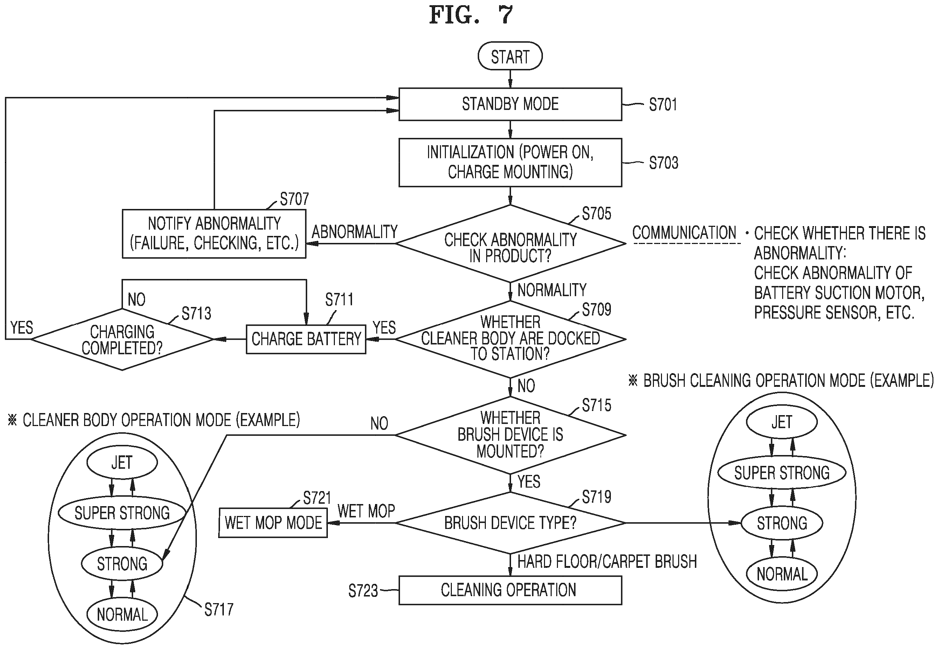

FIG. 7 is a flowchart illustrating an operation of a cordless cleaner according to an embodiment of the disclosure.

Referring to FIG. 7, in operation S701, the cordless cleaner 3000 is in a standby mode state. The cordless cleaner 3000 is powered-on in the standby mode state or initialized by a charge mounting state in operation S703. In operation S705, as part of the initialization, the cordless cleaner 3000 checks whether there is an abnormality in a product through self-diagnosis. For example, the cordless cleaner 3000 may determine whether there is an abnormality in the cordless cleaner 3000 through communication with the server 4000 or the user terminal 5000. For example, the cordless cleaner 3000 may detect an abnormality in the battery 150, an abnormality in the first suction motor 111 or the second suction motor 207, or an abnormality in the pressure sensor 160. When it is determined that the abnormality of the cordless cleaner 3000 is detected, in operation S707, the at least one main processor 1011 of the cordless cleaner 3000 may display whether there is the abnormality through the user interface 170, inform a user of items to be checked, and return to an initial standby mode state. When the cordless cleaner 3000 is normal, in operation S709, it may be determined through a detection sensor whether the station 2000 and the cleaner body 1000 have been docked. Here, the 'docking' includes not only electrical coupling of the station 2000 and the cleaner body 1000, but also mechanical adhesion thereof. The "docking" of the station 2000 and the cleaner body 1000 means that the cleaner body 1000 is mounted on the station 2000, but is not limited thereto, and the station 2000 on the top may be mounted on or coupled to the cleaner body 1000 on the bottom, and the station 2000 and the cleaner body 1000 may be docked to each other from the side. The detection sensor may be in the station 2000 and/or the cleaner body 1000. When the station 2000 and the cleaner body 1000 are docked, in operation S711, the station 2000 charges the battery 150 of the cleaner body 1000 through the charging circuit 2010, and in operation S713, the cleaner body 1000 determines whether charging of the battery 150 has been completed, and when charging is completed, the cordless cleaner 3000 returns to the initial standby mode state. When charging of the battery 150 is not completed, the cordless cleaner 3000 may return to operation S709 and maintain a state in which the battery 150 is continuously charged.

In operation S715, when the station 2000 and the cleaner body 1000 are not docked, because this is most likely a case where the user wants to clean with the cleaner body 1000, the at least one main processor 1011 of the cleaner body 1000 determines whether the brush device 120 is mounted on the cleaner body 1000, and when the brush device 120 is not mounted, the cleaner body 1000 operates in a cleaner body (handy) operation mode in operation S717. When the cleaner body 1000 is a robot cleaner in which the brush device 120 is mounted by default, operation S715 may be omitted. The cleaner body (handy) operation mode is not necessarily limited, but is divided into jet mode - super strong mode - strong mode - normal mode in the order of strong suction power. However, this is merely an example, more diverse modes in the order of strong suction power, or more simplified modes may be provided. Usually, the cleaner body (handy) operation mode in which the brush device 120 is not mounted has a stronger suction power than a brush operation mode in which the brush device 120 is mounted. This is because the brush device 120 is mounted, and when the suction power is high, the brush device 120 may stick to the floor. When it is determined that the brush device 120 is mounted on the cleaner body 1000, the at least one main processor 1011 of the cleaner body 1000 determines whether the mounted brush device 120 is a brush or a wet mop in operation S719. As a result of determination, when it is determined that the mounted brush device 120 is a wet mop, the cleaner body 1000 operates in a wet mop mode in operation S721. The wet mop mode is a mode in which an end of the cleaner body 1000 sprays water together to facilitate mopping when cleaning. When the brush device 120 mounted in the brush mode is a brush rather than a wet mop, a cleaning operation is performed in operation S723, where the brush cleaning operation mode may be divided into jet mode - super strong mode - strong mode - normal mode in the order of strong suction power, just like the handy operation mode. However, this is merely an example, more diverse modes in the order of strong suction power, or more simplified modes may be provided.

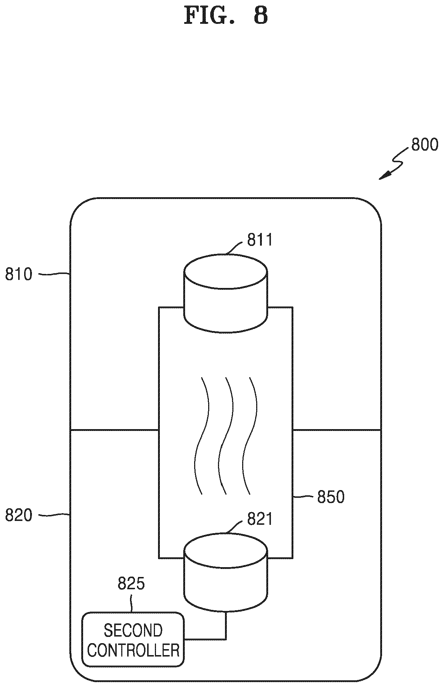

FIG. 8 is a schematic diagram illustrating generating BEMF in another motor by driving one motor according to an embodiment of the disclosure.

Referring to FIG. 8, a first device 810 on the top and a second device 820 on the bottom may or may not be electrically coupled to each other. When the first device 810 and the second device 820 are electrically coupled to each other, an electric device 800 may be charged in any one device. In an embodiment, the first device 810 and the second device 820 may be electrically coupled to each other by a charging terminal. In an embodiment, the first device 810 and the second device 820 may not be electrically connected to each other by the charging terminal but may be mechanically coupled to each other by simply mounting. In this case, when the first device 810 includes a battery, the battery may be charged by another path rather than through the second device 820.

In FIG. 8, the first device 810 is on the top and the second device 820 is on the bottom for convenience of explanation, a structure in which the first device 810 is at the bottom and the second device 820 is at the top, a structure in which the first device 810 and the second device 820 are coupled to each other from the side, or a structure in which the first device 810 and the second device 820 are coupled to each other in different directions is also possible. According to an embodiment of the disclosure, any method of generating BEMF to another suction motor according to an operation of one suction motor in any coupling structure may be applied. In addition, the two suction motors do not necessarily have to be suction motors, and the use of the suction motor may vary depending on the use of the electric device 800. It should be understood that the first device 810 being 'coupled' to the second device 820 includes any forms of coupling in which the first device 810 may be electrically or mechanically connected to the second device 820. In other words, it should be understood that the first device 810 being 'coupled' to the second device 820 includes all forms of coupling in which the first device 810 is mounted on the second device 820, and the first device 810 is electrically coupled to the side or the bottom of the second device 820. However, the first device 810 being 'coupled' to the second device 820 means that the first device 810 may be electrically or mechanically connected to the second device 820, and thus, it should be considered as the first device 810 being 'coupled' to the second device 820 even when the first device 810 and the second devices 820 are in an electrical interruption state. When the first device 810 and the second device 820 are 'electrically interrupted' while being electrically connected to each other through a charging terminal, this is only a temporary electrical cutoff state and it should be understood that the first device 810 and the second device 820 may be electrically connected to each other by a specific event.

According to an embodiment of the disclosure, the second device 820 may be a device that generally receives power by wired, but is not limited thereto, and the second device 820 may also be a device that is powered by a battery. In an embodiment, power supplied from a battery of the first device 810 to a controller of the first device 810 is interrupted while the second device 820 and the first device 810 are coupled to each other. In an embodiment, to prevent frequent charging from the second device 820 to the first device 810, an electrical connection between the second device 820 and the first device 810 may also be interrupted. At this time, an electrical interruption may be made by the first device 810 or the second device 820. In an embodiment, the electrical interruption between the second device 820 and the first device 810 may be made by a second controller 825 of the second device 820. An event of driving a second motor 821 may occur while the electrical connection between the second device 820 and the first device 810 is interrupted. The event of driving the second motor 821 may be at least one of an event of pushing a user input button on the second device 820, an event of receiving a control signal through communication from the server 4000, a user's computing device or the user terminal 5000, an event of executing a control signal by a program stored in a memory of the second device 820, or an event in which the first device 810 is electrically coupled to the second device 820. When the second motor 821 is driven through the event of driving the second motor 821, a pressure difference occurs as air flows in the flow path 850 shared by the first device 810 and the second device 820 by the driving of the second motor 821, and BEMF is generated as a suction fan of the first motor 811 rotates by the pressure difference. The generated BEMF may be used as a signal for waking up the first device 810 while electrical insulation is established between the first device 810 and the second device 820, and between a controller and a battery of the first device 810. In other words, the generated BEMF may be used to activate the battery of the first device 810 and the controller (not shown) of the first device 810. In an embodiment, the battery of the first device 810 and the controller (not shown) of the first device 810 may be sequentially activated, but the disclosure is not limited thereto.

In the case of the cordless cleaner 3000, the first device 810 may be the cleaner body 1000, the second device 820 may be the station 2000, the first motor 811 may be the first suction motor 111 of the cleaner body 1000, and the second motor 821 may be the second suction motor 207 of the station 2000. The controller of the first device 810 may be the controller 1100 of the cleaner body 1000, and the second controller 825 may be a main printed board assembly (PBA) 200 of the station 2000. In an embodiment, the first device 810 may be an automatic movable cleaner (robot cleaner) body, the second device 820 may be a station of the robot cleaner, and at this time, the electric device 800 may be the automatic movable cleaner (robot cleaner).

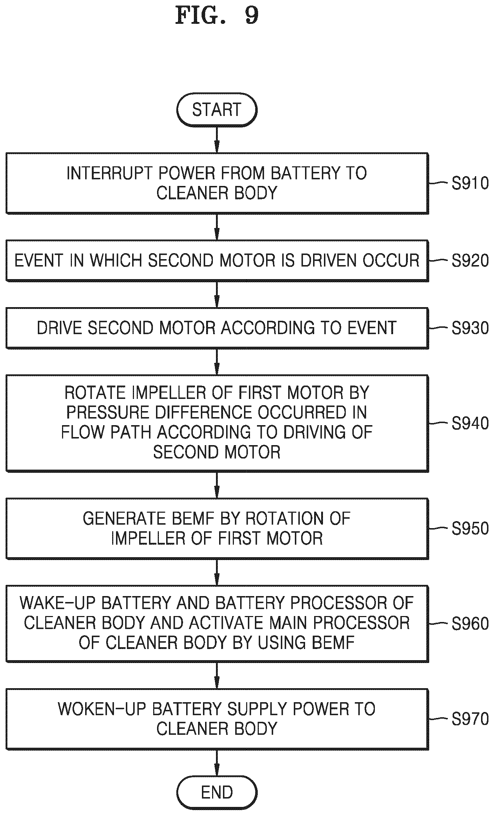

FIG. 9 is a flowchart illustrating an operation of supplying power to a device operating cordlessly according to BEMF generated in another motor by driving one motor according to an embodiment of the disclosure.

In the description of each operation below, in the case of the cordless cleaner 3000, the first device 810 may be the cleaner body 1000, the second device 820 may be the station 2000, the first motor 811 may be the first suction motor 111 of the cleaner body 1000, and the second motor 821 may be the second suction motor 207 of the station 2000. A controller of the first device 810 may be the controller 1100 of the cleaner body 1000, especially the main processor 1011, and the second controller 825 may be the processor 203 of the station 2000. In an embodiment, the first device 810 may be an automatic movable cleaner (robot cleaner) body, the second device 820 may be a station of the robot cleaner, and at this time, the electric device 800 may be the automatic movable cleaner (robot cleaner).

In operation S910, first, power is interrupted from a battery included in the first device 810 to the controller of the first device 810 to prevent power consumption of the controller of the first device 810. Also, selectively, a connection between the battery of the first device 810 and the first motor 811 may be interrupted. At this time, the first device 810 may be the cleaner body 1000.

The first device 810 and the second device 820 that may be electrically or mechanically coupled to each other include the first motor 811 and the second motor 821, respectively, and an event in which the second motor 821 is driven occurs in operation S920. The processor 203 of the station 2000 as the second device 820 receives and detects such an event. The event in which the second motor 821 is driven may occur in various ways. The event of driving the second motor 821 may occur while an electrical connection between the first device 810 and the second device 820 is interrupted. The event of driving the second motor 821 may be at least one of an event of pushing a user input button on the second device 820, an event of receiving a control signal through communication from the server 4000 or the user terminal 5000, or an event of executing a control signal by a program stored in a memory of the second device 820. The event of pushing the user input button on the second device 820 may be an event for emptying the dust bin 110 of the cleaner body 1000 in the case of the cordless cleaner 3000. The event according to the control signal received through communication from the server 4000 or the user terminal 5000 or the event according to the control signal received by the program stored in the memory of the second device 820 may be an event related to emptying the dust bin 110 of the cleaner body 1000 or charging the battery of the first device 810.

In operation S930, the second motor 821 is driven according to the event in which the second motor 821 is driven. The driving of the second motor 821 may be an operation for sucking up dust from the dust bin 110 of the cleaner body 1000 to the collector 212 of the station 2000 when the electric device 800 is the cordless cleaner 3000.

In operation S940, a suction fan of the first motor 811 in the first device 810 rotates by a pressure difference occurred in the flow path 850 shared by the first device 810 and the second device 820 according to the driving of the second motor 821. In operation S950, BEMF is generated by rotation of the suction fan of the first motor 811. The generated BEMF is transmitted to the inside of the first device 810 as a kind of wake-up signal. In an embodiment, the BEMF may be used to activate the battery processor 1551 responsible for controlling the battery of the first device 810, and the battery processor may activate the main processor 1011 of the cleaner body 1000. Alternatively, in an embodiment, the BEMF may be used to directly activate the main processor 1011 of the cleaner body 1000, which is the first device 810.

In operation S960, the BEMF transmitted to the first device 810 as the wake-up signal may be used as a signal for activating the battery and the controller of the first device 810. In an embodiment, the battery 150 and the battery processor 1551 of the cleaner body 1000 may be woken up, and the woken-up battery processor 1551 may activate the main processor 1011 of the cleaner body 1000.

In operation S970, the woken-up battery 150 may supply power to the first device 810. In an embodiment, the woken-up battery 150 may supply power to the main processor 1011 so that the cleaner body 1000, especially the main processor 1011 of the cleaner body 1000, may operate. With such a method, a dust discharge operation of the station 2000 may be recognized in the cleaner body 1000 while minimizing power consumption of the cordless cleaner 3000.

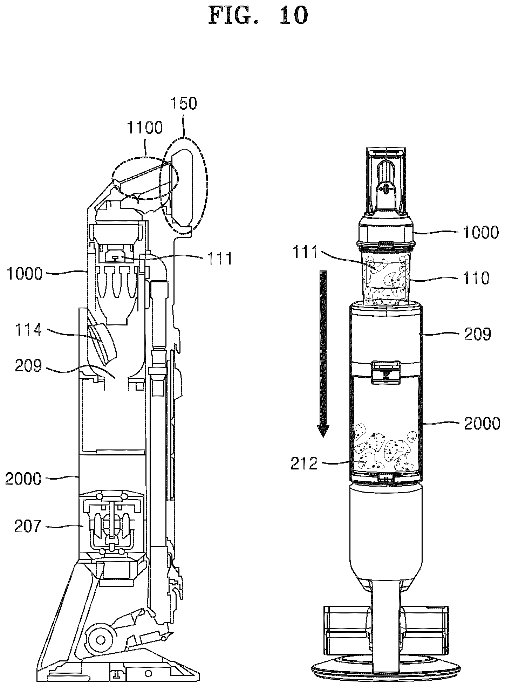

FIG. 10 is a diagram illustrating an operation of a cordless cleaner through a flow path according to an embodiment of the disclosure.

FIG. 10 illustrates that BEMF generation mechanisms according to FIGS. 8 and 9 are the same, but specifically, BEMF is generated in the cordless cleaner.

Referring to FIG. 10, the cleaner body 1000 is mounted on the station 2000 of the cordless cleaner 3000. The cleaner body 1000 cordlessly performs a cleaning operation and supplies power for the cleaning operation from the battery 150. The controller 1100 including the main processor 1011 for controlling the operation of the cleaner body 1000 may be located on a handle part of the cleaner body 1000 according to an embodiment, but is not limited thereto, and may be disposed in various places according to the design of the cleaner body 1000, and a part of the controller 1100 may be divided from each other and disposed on the cleaner body 1000.

While the cleaner body 1000 is mounted on the station 2000, the station 2000 may charge the battery 150 of the cleaner body 1000 through the charging circuit 2010 of the station 2000. According to an embodiment, an event of driving the second suction motor 207 may occur while the cleaner body 1000 is mounted on the station 2000 or at the moment the cleaner body 1000 is electrically coupled to the station 2000. In an embodiment, the event of driving the second suction motor 207 may be an operation of moving dust collected in the dust bin 110 of the cleaner body 1000 to the collector 212 of the station 2000. When the second suction motor 207 is driven through the event of driving the second suction motor 207, the dust bin door 114 is opened to secure a flow path opened to the dust bin 110 on the cleaner body 1000. When the dust bin door 114 is opened, a passage through which dust may move through the flow path 209 between the cleaner body 1000 and the station 2000 is secured. When the second suction motor 207 is driven, an operation of sucking up dust from the dust bin 110 of the cleaner body 1000 through the flow path 209 is performed. A pressure difference occurs in the flow path 209 by a suction operation of the second suction motor 207, and the pressure difference rotates a suction fan of the first suction motor 111, which generates BEMF in the first suction motor 111.

In an embodiment, the dust bin door 114 opened by the suction operation of the second suction motor 207 may be automatically closed when a certain time elapses after the suction operation ends or the suction operation starts.

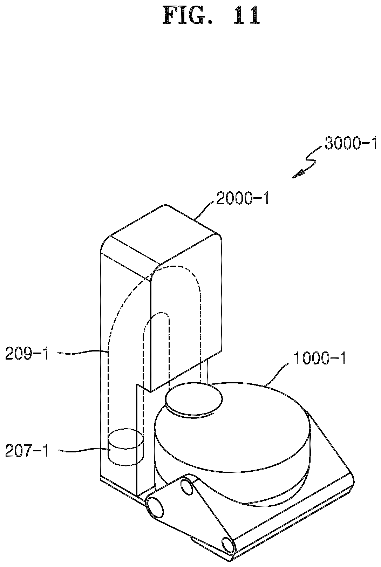

FIG. 11 illustrates a robot cleaner device as a cordless cleaner device that generates BEMF in another motor by driving one motor according to an embodiment of the disclosure.

According to FIG. 11, the cleaner body 1000 of FIG. 10 may correspond to a robot cleaner 1000-1 that is a cleaner body of an automatic movable cleaner 3000-1 of FIG. 11. A robot cleaner is a cleaner that performs cleaning while automatically moving the floor by a sensor that recognizes space. The robot cleaner 1000-1 returns to a station 2000-1 and is docked on or coupled to the station 2000-1 when a battery falls below a certain level or cleaning of certain space is finished.

The automatic movable cleaner 3000-1 according to FIG. 11 is placed on the bottom of the station 2000-1 to which the robot cleaner 1000-1 that is the cleaner body is coupled, when emptying a dust bin of the robot cleaner 1000-1, unlike the cleaner body 1000 and the station 2000 according to FIG. 10, the station 2000-1 coupled on the top sucks up and moves dust. A second suction motor 207-1 on the station 2000-1 may suck up dust from the dust bin of the robot cleaner 1000-1 and move the dust toward the station 2000-1 through a reverse U-shaped flow path 209-1. The flow path 209-1 is only an embodiment, and may have various forms (e.g., reverse- 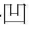 form) in the automatic movable cleaner 3000-1 in which the robot cleaner 1000-1 is used. At this time, as shown in FIGS. 8 to 10, when the battery and the main processor 1011 on the robot cleaner 1000-1 are deactivated, BEMF is generated when a suction fan of a first suction motor (not shown) on the robot cleaner 1000-1 rotates by the operation of the second suction motor 207-1 on the station 2000-1, and the generated BEMF may be used as a wake-up signal for activating the battery 150 and the battery processor 1551 on the robot cleaner 1000-1. In an embodiment, when the battery 150 and the battery processor 1551 are first activated, the battery processor 1551 may operate to sequentially activate the main processor 1011 of the robot cleaner 1000-1.

FIG. 12A is a block diagram illustrating activating a cleaner body by BEMF according to an embodiment of the disclosure.

Referring to FIG. 12A, the station 2000 may include the power supply device 208 including a SMPS that supplies DC power from an input power source 10 that is an AC power source, and the main PBA 200 including the communication interface 201, the user interface 204, and the processor 203. The station 2000 also includes the second suction motor 207 for moving dust from the cleaner body 1000 and the charging terminal 211 for charging the battery 150 of the cleaner body 1000. The cleaner body 1000 includes the controller 1100 responsible for overall controls of the cleaner body 1000, the battery 150, the first suction motor 111 for sucking up dust from the brush device 120 through a dust suction flow path, and the charging terminal 151 to be electrically connected to the charging terminal 211 of the station 2000 to charge the battery 150 from the station 2000. The controller 1100 may include a PBA. The controller 1100 includes the main processor 1011 responsible for a control operation of the cleaner body 1000, the communication interface 190 for communicating with the station 2000 or an external device - the server 4000 or the user terminal 5000-, and the user interface 170. The user interface 170 may include the input interface 171 for receiving a user input and the output interface 173 for displaying information to a user. The battery 150 may include a battery cell array 153 charged with electrical energy and the battery controller 155 for checking a state of the battery 150 and controlling the battery 150. In an embodiment, the battery controller 155 may be located inside a battery pack including the battery 150, and may control the battery 150 to supply driving power so that the controller 1100 and the first suction motor 111 of the cleaner body 1000 may be driven. To control the battery 150, the battery controller 155 may include a MCU or a processor. At this time, the processor may be a battery processor 1151. The battery controller 155 may include the sub-PCB 1132 including the charge release switch 1217, the switch 1210, and the load detection sensor 1134 that are part of the PCB 113 in FIG. 5, and the battery processor 1151. The battery processor 1151 may be a processor that controls 'connection' and 'disconnection' of connection A to the main processor 1011 and connection B to the first suction motor 111.

The processor 203 of the station 2000 may be referred to as a 'station processor', receive DC power from the SMPS which is the power supply device 208 and control internal components of the station 2000, and control a charging operation of supplying power to the battery 150 of the cleaner body 1000. The processor 203 of the station 2000 may control the second suction motor 207, the communication interface 201, the user interface 204, etc. The user interface 204 may include a user input button, the second suction motor 207 may be driven by a user input button push, and a dust bin of the station 2000 may suck up dust collected in the cleaner body 1000.

The main processor 1011 of the cleaner body 1000 may be activated by receiving power from the battery 150, and is responsible for overall controls of the cleaner body 1000. In an embodiment, the main processor 1011 may control the communication interface 190, the user interface 170, the first suction motor 111 of the cleaner body 1000, etc. The communication interface 190 may support BLE communication, but is not limited thereto, and may also support communication such as Wi-Fi or Bluetooth (BT). The user interface 170 may include the input interface 171 through which a user may issue an operation command, and the output interface 173 through which the user may show a current state of the cordless cleaner 3000.

In an embodiment, when the cleaner body 1000 is docked on and coupled to the station 2000 and the battery 150 is fully charged, the processor 203 of the station 2000 or the battery processor 1551 interrupts the power supply from the battery 150 to the cleaner body 1000 (interruption of connection A in FIG. 12A), and thus, power consumption of the cleaner body 1000 is minimized. Power interruption (interruption of connection A) from the battery 150 to the main processor 1011 in the cleaner body 1000 may reduce power consumption when the cleaner body 1000 is left unattended for a long time without cleaning or is only mounted on the station 2000 for a long time, and may improve natural discharge of the battery 150.

In an embodiment, when the power of the main processor 1011 of the cleaner body 1000 is completely interrupted (interruption of connection A) from the battery 150 while the station 2000 and the cleaner body 1000 are coupled to each other, the battery processor 1551 also interrupts connection B so as not to consume power of the battery 150 so that the battery 150 is in a shut-down state (interruption of connection B). In an embodiment, the processor 203 of the station 2000 may perform interruption of connection B between the battery controller 155 and the first suction motor 111.

When the user presses the dust discharge button - the user input button - of the user interface 204 of the station 2000 while connection A and connection B are interrupted, an event occurs in which the second suction motor 207 for dust discharge is driven. At this time, pressing the dust discharge button is only an example, and the event in which the second suction motor 207 is driven may occur in various ways. For example, the event of periodically driving the second suction motor 207 at a long time interval (e.g., 7 to 9 hours) may occur by a program stored in the internal memory 202 of the station 2000. As another example, the user may remotely generate an event for dust discharge in the user terminal 5000 - for example, a smartphone, smartwatch, or mobile phone of a user - and connect to the event in which the second suction motor 207 operates. As another example, the server 4000 may generate an event of remotely operating the second suction motor 207 or driving the second suction motor 207 for dust discharge as part of a failure diagnosis to determine whether the second suction motor 207 operates normally.

In an embodiment, it is assumed that the event in which the second suction motor 207 operates is the event for dust discharge. The processor 203 operates the second suction motor 207 of the station 2000 to collect dust in the dust bin of the cleaner body 1000 based on the event of driving the second suction motor 207. When the second suction motor 207 operates, BEMF is generated in the first suction motor 111 when a suction fan of the first suction motor 111 of the cleaner body 1000 rotates due to a pressure difference inside the flow path 209 connecting the cleaner body 1000 to the station 2000. The cordless cleaner 3000 uses a BEMF signal as an event signal to wake-up the shut-down battery 150, and thus, connection B may be activated, and the activated battery controller 155 may activate the controller 1100 including the main processor 1011 by the battery processor 1551. In other words, even when the battery 150 is shut down, the main processor 1011 of the cleaner body 1000 may detect and recognize the operation of the station 2000 through the BEMF generated by the first suction motor 111 due to the pressure difference in the flow path 209 according to the operation of the second suction motor 207 of the station 2000, without a separate button click or signal transmission. At this time, because the BEMF signal is detected from the BEMF generated in the first suction motor 111 through connection B connected to the battery 150, the battery controller 1551 - especially the battery processor 1551 - may be activated (connection A) by using the detected BEMF signal as the wake-up signal.

Accordingly, the activated battery processor 1551 sequentially wakes up the main processor 1011 including the controller 1100 to activate connection A, and thus, power from the battery 150 to the main processor 1011 may be supplied.

As described above, power consumption of the battery 150 of the cleaner body 1000 may be minimized by using the BEMF of the first suction motor 111 as the wake-up signal. In particular, power consumption and natural discharge loss of the battery 150 may be minimized under the condition that the cordless cleaner 3000 is left unattended for a long time.

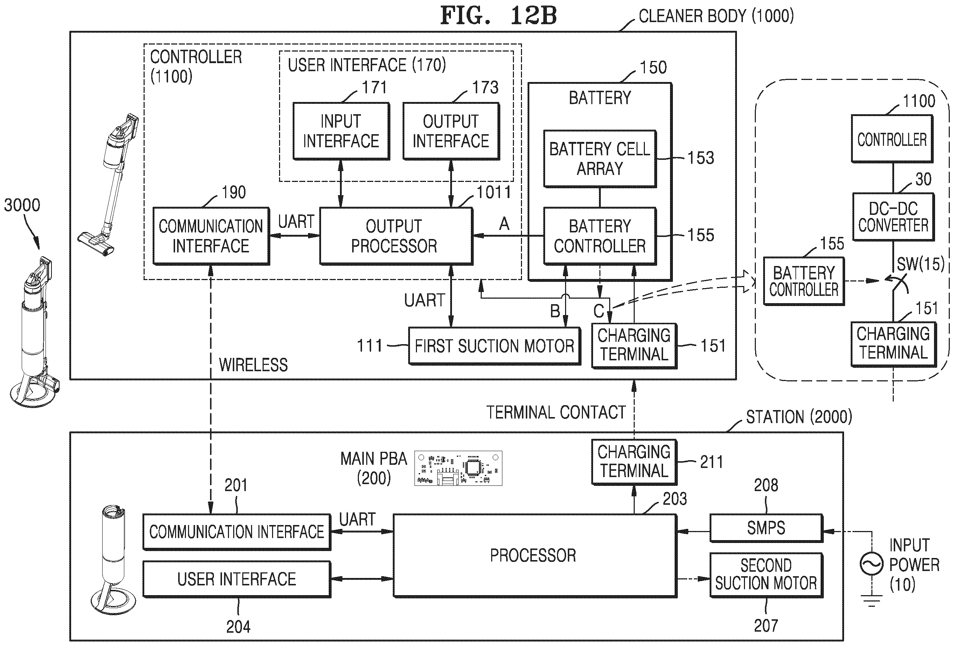

FIG. 12B is a block diagram illustrating activating a cleaner body by BEMF according to an embodiment of the disclosure.

The block diagram according to FIG. 12B is different from the block diagram of FIG. 12A in that connection C is added in which the controller 1100 of the cleaner body 1000 may directly receive power by the power supply device 208 of the station 2000 through the charging terminal 151. The configurations of the cleaner body 1000 and the station 2000 are the same as those of FIG. 12A, and thus, redundant descriptions of the configurations will be omitted and an operation according to connection C will be additionally described.

The processor 203 of the station 2000 receives DC power from a SMPS which is the power supply device 208 controls internal components of the station 2000, and controls a charging connection that supplies power to the battery 150 of the cleaner body 1000. The processor 203 of the station 2000 may control the second suction motor 207, the communication interface 201, the user interface 204, etc. The user interface 204 may include a user input button, the second suction motor 207 may be driven by a user input button push, and a dust bin of the station 2000 may suck up dust collected in the cleaner body 1000.

The main processor 1011 of the cleaner body 1000 may be activated by receiving power from the battery 150, and is responsible for overall controls of the cleaner body 1000.

In an embodiment, when the cleaner body 1000 is docked on and coupled to the station 2000 and the battery 150 is fully charged, the processor 203 of the station 2000 or the battery processor 1551 interrupts the power supply from the battery 150 to the main processor 1011 of the cleaner body 1000 (interruption of connection A in FIG. 12B), and thus, power consumption of the main processor 1011 of the cleaner body 1000 is minimized. Power interruption (interruption of connection A) from the battery 150 to the main processor 1011 in the cleaner body 1000 may reduce power consumption when the cleaner body 1000 is left unattended for a long time without cleaning or is only mounted on the station 2000 for a long time, and may improve natural discharge.

In an embodiment, when power from the battery 150 to the cleaner body 1000 is completely interrupted because the cleaner body 1000 is left unattended for a long time while the station 2000 and the cleaner body 1000 are coupled to each other, the battery processor 1551 may cause the battery 150 to be in a shut-down state (interruption of connection B). In an embodiment, the processor 203 of the station 2000 may perform shut-down (interruption of connection B) of the battery 150. In an embodiment, before the battery 150 is shut down by the battery processor 1551, the battery processor 1551 may activate connection C (the controller 1100 - the charging terminal 151) to continuously display information by the output interface 173, etc. by activating the main processor 1011 of the cleaner body 1000 while the battery 150 is in the shut-down state The battery processor 1551 may perform connection C, or the processor 203 of the station 2000 may perform connection C according to an embodiment. According to an embodiment, the main processor 1011 of the cleaner body 1000 may always be maintained in an activation state by performing connection C before interrupting connection A and connection B. When the main processor 1011 of the cleaner body 1000 receives power directly from the power supply device 208 of the station 2000 through the charging terminal 151, because DC voltage provided by the power supply device 208 is about 19 V to 30 V, a DC-DC converter 30 for properly depressurizing the DC voltage may be required. In addition, SW 15 for connecting and interrupting connection C is required. The SW 15 which is an electronic switch may use a relay, a transistor (TR), a FET, an IGBT, etc., but is not limited thereto. The SW 15 may be controlled by the battery processor 1551 or the processor 203 of the station 2000.

While connections A and B are interrupted and only connection C is connected, when the user presses the dust discharge button - the user input button - of the user interface 204 of the station 2000, an event in which the second suction motor 207 for dust discharge is driven occurs. The processor 203 operates the second suction motor 207 of the station 2000 to collect dust in the dust bin of the cleaner body 1000 based on the event of driving the second suction motor 207. When the second suction motor 207 operates, BEMF is generated in the first suction motor 111 when a suction fan of the first suction motor 111 of the cleaner body 1000 rotates due to a pressure difference inside the flow path 209 connecting the cleaner body 1000 to the station 2000. The cordless cleaner 3000 uses a BEMF signal as an event signal to activate connection B for waking up the shut-down battery 150 and the battery processor 1551, and the battery processor 1551 similarly activated by the activation of the battery 150 may interrupt connection C. In an embodiment, the processor 203 of the station 2000 may interrupt connection C according to the event in which the second suction motor 207 is driven. When connection B is made and connection C is interrupted, the battery processor 1551 of the cleaner body 1000 may activate the controller 1100 including the main processor 1011. In other words, even when the battery 150 is shut down, the main processor 1011 of the cleaner body 1000 may detect and recognize the operation of the station 2000 through the BEMF generated by the first suction motor 111 due to the pressure difference in the flow path 209 according to the operation of the second suction motor 207 of the station 2000, without a separate button click or signal transmission. At this time, because the BEMF signal generated in the first suction motor 111 is detected at the charging terminal 151 of the battery 150, the battery processor 1551 may be activated by using the detected BEMF signal as the wake-up signal.

Accordingly, the activated battery processor 1551 may sequentially interrupt connection C, activate connection A between the main processor 1011 and the battery 150, and activate the main processor 1011 including the controller 1100 by supplying power from the battery 150.

As described above, power consumption of the battery 150 of the cleaner body 1000 may be minimized by using the BEMF of the first suction motor 111 as the wake-up signal. In particular, power consumption and natural discharge loss of the battery 150 may be minimized under the condition that the cordless cleaner 3000 is left unattended for a long time.

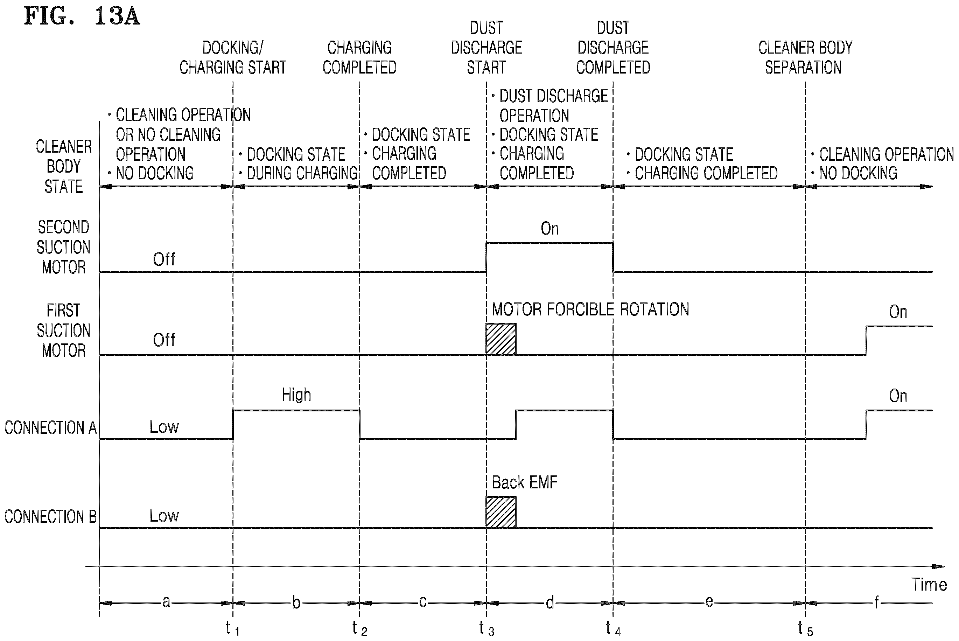

FIG. 13A is a sequence diagram illustrating waking up a battery by BEMF according to an embodiment of the disclosure.

Referring to FIG. 13A, the x-axis indicates time, and the y-axis shows a state change of each of the cleaner body 1000, the second suction motor 207, the first suction motor 111, and connection A and connection B of FIG. 12A. For convenience, it is assumed that period a is 0 to t₁, period b is t₁ to t₂, period c is t₂ to t₃, period d is t₃ to t₄, period e is t₄ to t₅ to e, and period f is after ts over time.

In the period a, the cleaner body 1000 is not yet mounted on or coupled to the station 2000. At this time, the cleaner body 1000 is not operating, and accordingly, the first suction motor 111 or the second suction motor 207 on the station 2000 is also not operating. In the period a, because the station 2000 does not charge the battery 150 of the cleaner body 1000, connection A also maintains a deactivation (low) state. The cleaner body 1000 may perform a cleaning operation in the period a as an example. At this time, the first suction motor 111 is changed to be operating ON.

When the cleaner body 1000 is mounted on or coupled to the station 2000 at the time t₁, a state of the battery 150 is checked, and when it is determined that the battery 150 needs to be charged, the station 2000 charges the battery 150. During charging, both the first suction motor 111 and the second suction motor 207 stop operating, and connection A is activated during charging. At the time t₂, charging is completed and, in the period c, connection A is deactivated. In an embodiment, in the period c, in order to minimize power consumption, a compensation charging operation from the station 2000 to the cleaner body 1000 may also be stopped so that the cordless cleaner 3000 enters a standby mode. In an embodiment, power of the cleaner body 1000 to the main processor 1011 may also be interrupted.

At the time t₃, an event of driving the second suction motor 207 occurs. For example, the event of driving the second suction motor 207 may be at least one of an event in which a user pushes a user input button to discharge dust collected in the cleaner body 1000 to the station 2000, an event in which the station 2000 receives a control signal through communication from the outside, an event in which the station 2000 executes a control signal by an internal program, or an event in which the cleaner body 1000 is electrically coupled to the station 2000. In an embodiment, the event in which the station 2000 receives the control signal through communication from the outside, the event in which the station 2000 executes the control signal by the internal program, and the event in which the cleaner body 1000 is electrically coupled to the station 2000 may be events for discharging dust collected in the cleaner body 1000 to the station 2000.

According to the events above, the second suction motor 207 of the station 2000 is operating ON, and a suction fan of the first suction motor 111 of the cleaner body 1000 rotates by a pressure difference of the flow path 209 between the station 2000 and the cleaner body 1000. As a result, BEMF is generated in the first suction motor 111. The BEMF activates connection B as a signal for waking up the battery 150 and the battery processor 1551 of the cleaner body 1000. The woken-up battery 150 supplies power to the main processor 1551 of the cleaner body 1000 by control of the battery processor 1551 (connection A ON), and activates the main processor 1011 of the cleaner body 1000. In an embodiment, the first suction motor 111 may forcibly end rotation when lower switches of the inverter 1200 of the cleaner body 1000 are turned on. The inverter 1200 of the cleaner body 1000 may include the switch 1210 for driving the first suction motor 111.

When dust discharge is completed at the time t₄, in the period e, the operation of the second suction motor 207 is completed, power of the cleaner body 1000 to the main processor 1011 is again interrupted, and the cordless cleaner 3000 enters the standby mode that minimizes power consumption.

When the cleaner body 1000 is separated from the station 2000 at the time ts, the cleaner body 1000 may perform the cleaning operation while operating the first suction motor 111. At this time, the battery 150 and the main processor 1011 of the cleaner body 1000 may be connected (connection A) so that the main processor 1011 may be activated.

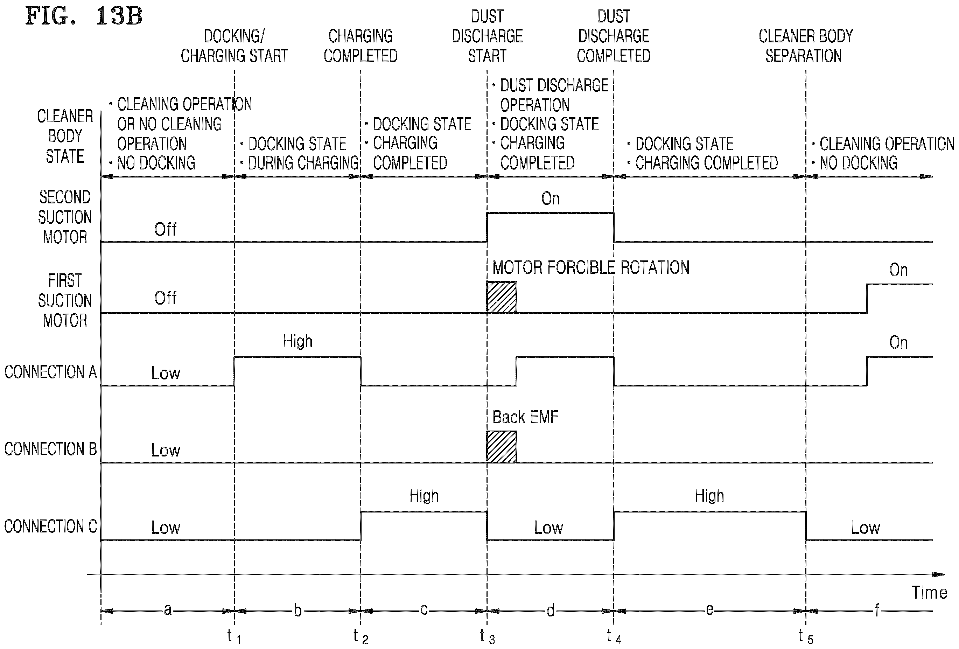

FIG. 13B is a sequence diagram illustrating waking up a battery by BEMF according to an embodiment of the disclosure.

FIG. 13B has almost the same as FIG. 13A in the operation, but an operation sequence of connection C as shown in FIG. 12B is added. Referring to FIG. 13B, the x-axis indicates time, and the y-axis shows a state change of each of the cleaner body 1000, the second suction motor 207, the first suction motor 111, and connection A, connection B, and connection C of FIG. 12B. For convenience, it is assumed that period a is 0 to t₁, period b is t₁ to t₂, period c is t₂ to t₃, period d is t₃ to t₄, period e is t₄ to ts to e, and period f is after ts over time.

In the period a, the cleaner body 1000 is not yet mounted on or coupled to the station 2000. At this time, the cleaner body 1000 is not operating. Accordingly, the first suction motor 111 or the second suction motor 207 on the station 2000 is also not operating. In the period a, because the station 2000 does not charge the battery 150 of the cleaner body 1000, connection A also maintains a deactivation (low) state. The cleaner body 1000 may perform a cleaning operation in the period a as an example. At this time, the first suction motor 111 is changed to be operating ON.

When the cleaner body 1000 is mounted on or coupled to the station 2000 at the time t₁, a state of the battery 150 is checked, and when it is determined that the battery 150 needs to be charged, the station 2000 charges the battery 150. During charging of the battery 150, both the first suction motor 111 and the second suction motor 207 stop operating, and connection A is activated (HIGH) when the battery 150 is charged. At the time t₂, charging is completed, and in the period c, connection A is deactivated, and power from the battery 150 to the main processor 1011 of the cleaner body 1000 is interrupted. In an embodiment, in the period c, in order to minimize power consumption, a compensation charging operation from the station 2000 to the cleaner body 1000 may also be stopped so that the cordless cleaner 3000 enters a standby mode. In order for the cleaner body 1000 to continuously display basic information, in the period c, connection C is activated, and the main processor 1011 of the cleaner body 1000 receives power directly from the power supply device 208 of the station 2000. Therefore, the battery 150 is not consumed in the period c (interruption of connection A), but the cleaner body 1000 may continuously perform an operation (information display, etc.) through the main processor 1011 of the cleaner body 1000.

At the time t₃, an event of driving the second suction motor 207 occurs. The second suction motor 207 of the station 2000 is operating ON according to the event of driving the second suction motor 207, and a suction fan of the first suction motor 111 of the cleaner body 1000 rotates by a pressure difference of the flow path 209 between the station 2000 and the cleaner body 1000. As a result, BEMF is generated in the first suction motor 111. The BEMF activates connection B as a signal for waking up the battery 150 and the battery processor 1551 of the cleaner body 1000. The woken-up battery processor 1551 releases connection C and activates the main processor 1011 of the cleaner body 1000 while supplying power to the cleaner body 1000 (connection A ON). In an embodiment, the first suction motor 111 may forcibly end rotation when lower switches of legs 1201, 1202, and 1203 of the inverter 1200 of the cleaner body 1000 are turned on. The inverter 1200 of the cleaner body 1000 may include the switch 1210 for driving the first suction motor 111. In an embodiment, releasing of connection C may be performed by the processor 203 of the station 2000 based on the event of driving the suction motor 207 occurred in the station 2000.

When dust discharge is completed at the time t₄, in the period e, the operation of the second suction motor 207 is completed, a power connection from the battery 150 to the main processor 1011 of the cleaner body 1000 is again interrupted (interruption of connection A), and the cordless cleaner 3000 enters a standby mode that minimizes power consumption. At this time, the battery processor 1551 may activate the connection C again.

When the cleaner body 1000 is separated from the station 2000 at the time ts, the cleaner body 1000 may perform the cleaning operation while operating the first suction motor 111. At this time, the battery 150 and the main processor 1011 of the cleaner body 1000 may be connected (connection A) so that the controller 1100 may be activated.

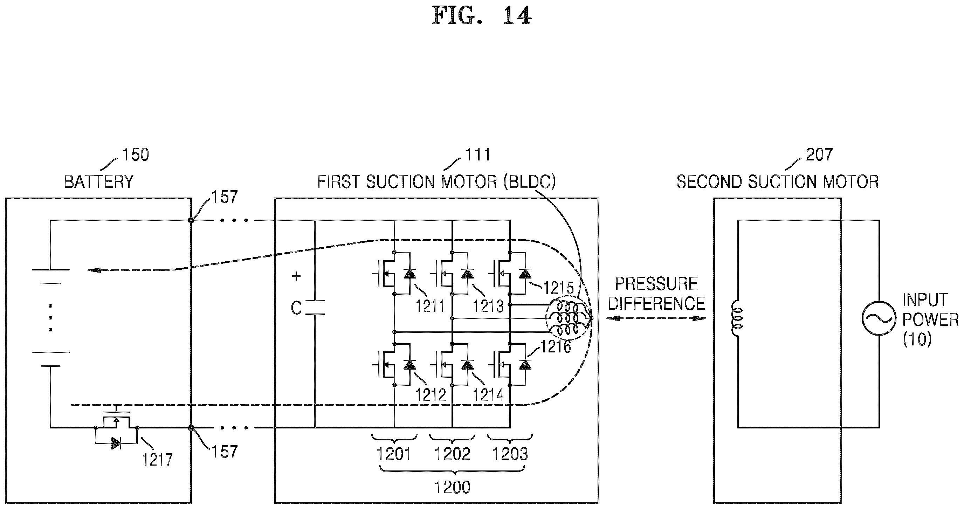

**FIG. 14** is a circuit diagram illustrating waking up a battery by generation of BEMF according to an embodiment of the disclosure.

Referring to FIG. 14, the station 2000 is connected to the input power source 10 that supplies constant power, but the station 2000 may necessarily be connected to the input power source 10 that supplies constant power, or may receive power from a battery or both.

According to an embodiment of the disclosure, when the second suction motor 207 on the station 2000 is driven to empty the dust bin 110 of the cleaner body 1000, BEMF is generated in the first suction motor 111 when a suction fan of the first suction motor 111 of the cleaner body 1000 forcibly rotates due to a pressure difference of the flow path 209 connecting the cleaner body 1000 to the station 2000. When BEMF is generated in the first suction motor 1110, power is supplied to the battery 150 while a back-parallel diode of switches 1211, 1212, 1213, 1214, 1215, and 1216 included in the inverter 1200 acts as a rectifier. Such a BEMF signal may be detected in the battery terminal 157 of the battery 150. In an embodiment, the battery processor 1551 is activated by using the BEMF signal detected from the battery terminal 157 as a wake-up signal. The activated battery processor 1551 may activate connection A to supply power from the battery 150 to the main processor 1011 of the cleaner body 1000, and the activated main processor 1011 may initiate main circuit control of the cleaner body 1000.

In FIG. 14, the charge release switch 1217 included in the battery 150 is a switch for releasing charging according to a charging state of the battery 150.

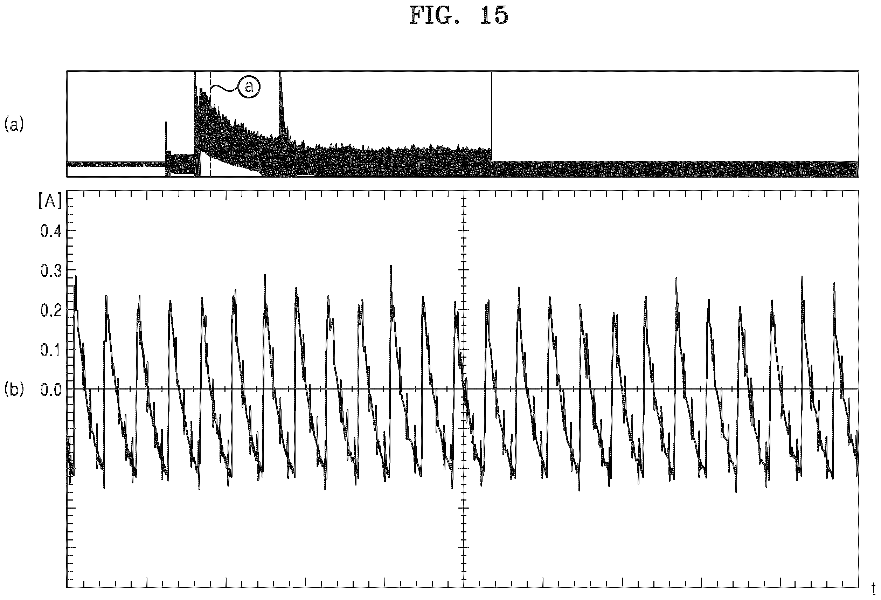

FIG. 15 is a BEMF current waveform diagram according to an embodiment of the disclosure.

Referring to FIG. 15, the x-axis indicates time, and the y-axis shows current [A]. In the BEMF current waveform diagram, (b) is a temporally enlarged waveform at a time ⓐ of a waveform (a). With regard to the BEMF current waveform diagram, it may be seen that BEMF of more than 300 mA is generated based on a root mean square (RMS) for about 1.5 seconds near ⓐ where the maximum BEMF is generated. In general, even when only a current RMS value is 40 mA or more, the battery controller 155 may recognize BEMF as a wake-up signal, and thus, a BEMF current of 300 mA or more is sufficient to be recognized as a battery wake-up signal.

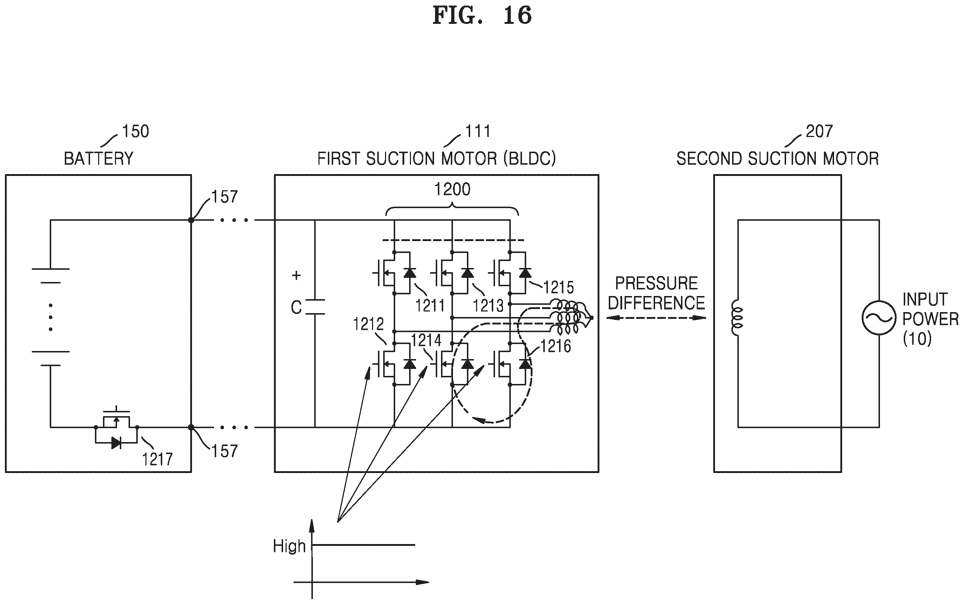

FIG. 16 is a circuit diagram illustrating an operation of stopping a first suction motor according to an embodiment of the disclosure.

When a suction fan of the first suction motor 111 operates by a pressure difference of the flow path 209 upon driving of the second suction motor 207, the first suction motor 111 continues to operate, and once wake-up of the cleaner body 1000 ends, the first suction motor 111 needs to be forcibly stopped within a short time.

According to an embodiment of the disclosure, when BEMF is generated in the first suction motor 111, the first processor 1131 of the PCB 113 of the cleaner body 1000 performs an operation of forcibly consuming the BEMF by turning on the lower three switches 1212, 1214, and 1216 of the inverter 1200 that operates the first suction motor 111. When the lower three switches 1212, 1214, and 1216 of the inverter 1200 are turned on, the generated BEMF forms a circuit loop in a motor winding direction, and the BEMF is consumed by a motor winding resistor, and thus, the first suction motor 111 may be stopped within a short time. The time within which the first suction motor 111 is stopped may be selected in various ways, which may be considered to be determined by an on-duty ratio of the lower three switches 1212, 1214, and 1216.

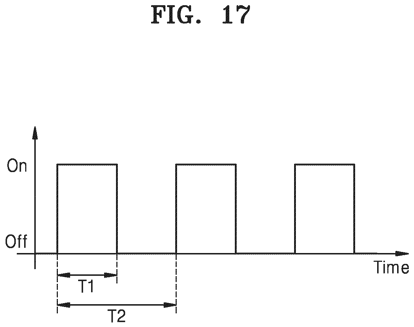

FIG. 17 is a waveform diagram illustrating a duty ratio of lower switches of an inverter for stopping a first suction motor according to an embodiment of the disclosure.

The duty ratio according to FIG. 17 represents a ratio at which the lower three switches 1212, 1214, and 1216 of the inverter 1200 are turned on. The duty ratio may be calculated as T1/T2*100 (%), and the higher the duty ratio, the longer the time taken to turn on the lower three switches 1212, 1214, and 1216, and the shorter the time taken to stop the first suction motor 111 As shown in FIG. 17, the duty ratio may be set to about 50 %, but the on-duty ratio T1/T2 of the lower three switches 1212, 1214, and 1216 of the inverter 1200 may be variously set, such as 25%, 50%, 75%, 100%, etc., and different duty ratios may be combined and applied over time.

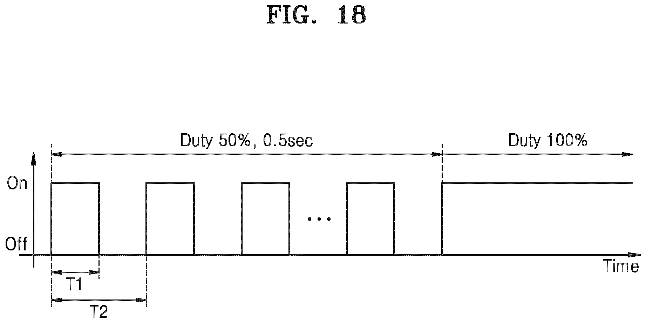

FIG. 18 is a waveform diagram illustrating adjusting a duty ratio of lower switches of an inverter according to an embodiment of the disclosure.

According to FIG. 18, the on-duty of the lower switches 1212, 1214, and 1216 of the inverter 1200 of the cleaner body 1000 is 50 % for an initial 0.5 seconds and then, 100 % after 0.5 seconds so that BEMF is completely consumed. The duty ratio may vary depending on specifications (e.g., an overheat safety level, a rated current level, etc.) of the first suction motor 111 or a voltage level of the input power source 10.

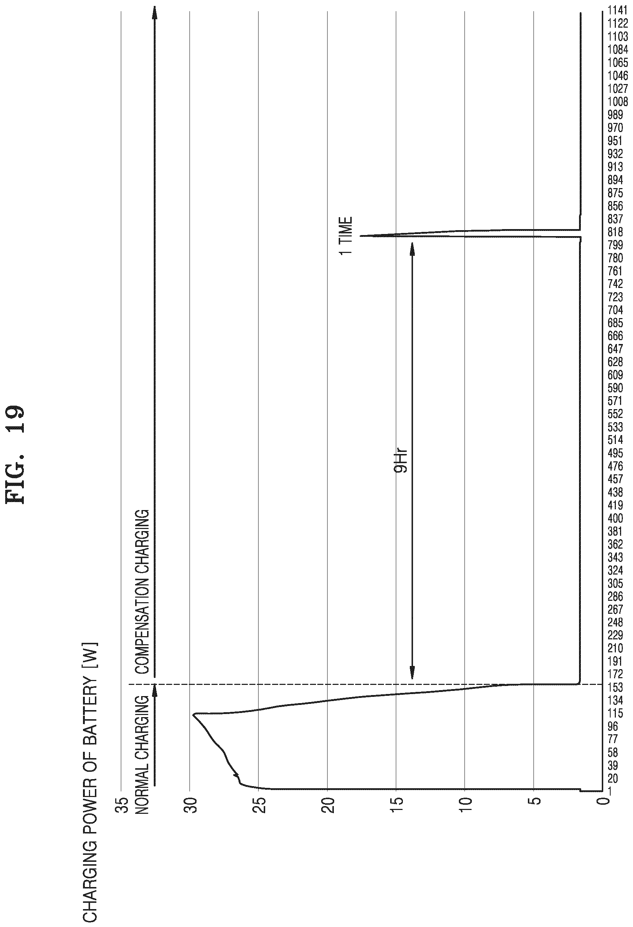

FIG. 19 is a waveform diagram illustrating a cycle in which compensation charging of a cordless cleaner is performed in a standby mode according to an embodiment of the disclosure.

FIG. 19 is a compensation charging cycle waveform diagram in which the cordless cleaner 3000 interrupts charging in the standby mode and reduces the compensation charging cycle according to an embodiment of the disclosure. It may be seen that compensation charging is performed every 9 hours compared to compensation charging performed every 1 hour in FIGS. 3A and 3B, so that the life of the battery 150 may be increased and unnecessary power loss in the cordless cleaner 3000 may be minimized. In FIG. 19, the compensation charging cycle of 9 hours is only an example, and the cycle may be shorter or longer according to the specifications of the battery 150 or the design specifications of a user. However, according to an embodiment of the disclosure, when BEMF is used as a wake-up signal on the battery 150, the charging cycle is significantly increased compared to the cases of FIGS. 3A and 3B, and thus, power loss may be minimized.

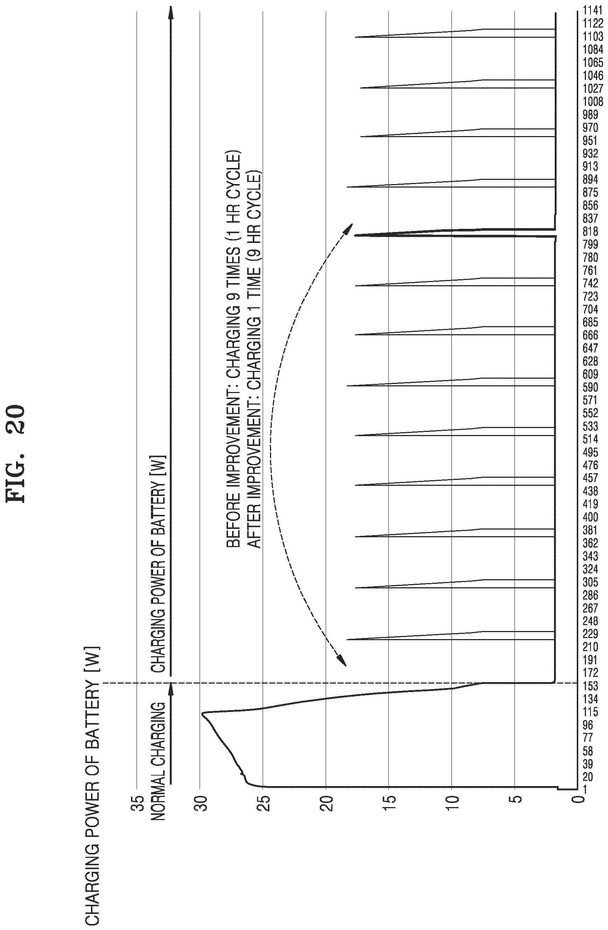

FIG. 20 is a waveform diagram illustrating before and after improvement of a compensation charging cycle of a cordless cleaner in a standby mode according to an embodiment of the disclosure.

Referring to FIG. 20, when BEMF is used as a wake-up signal on the battery 150 according to an embodiment of the disclosure, the compensation charging cycle is increased to 9 hours. Therefore, compared to the case where compensation charging needs to be performed at a regular interval of 1 hour without using BEMF as the wake-up signal on the battery 150, when BEMF is used as the wake-up signal on the battery 150 according to an embodiment of the disclosure, power loss in the cordless cleaner 3000 may be minimized and the life of the battery 150 may be further increased.

According to an embodiment of the disclosure, a cordless cleaner device includes a cordlessly powered cleaner body including a first motor and a battery configured to supply power a main processor, a station including a second motor driven based on a second motor driving event, and a station processor configured to control the second motor to be driven according to the second motor driving event, and a flow path shared by the cleaner body and the station, wherein BEMF is generated in the first motor by rotation of a suction fan connected to the first motor according to an air flow of the flow path by the driving of the second motor, the main processor is activated by the BEMF, and the first motor and the second motor each include a suction motor.

According to an embodiment, the cleaner body further includes a battery processor, and the battery processor is configured to control power supply from the battery to the main processor by using the BEMF generated in the first motor as a wake-up signal.

According to an embodiment, the second motor driving event occurs while an electrical connection between the main processor of the cleaner body and the battery in the cleaner body is interrupted.

According to an embodiment, the main processor being activated by the BEMF includes the battery processor configured to control the battery being activated by the BEMF generated in the first motor, and the activated battery processor activating the main processor of the cleaner body.

According to an embodiment, when the battery is charged to a certain level before the second motor driving event occurs, the station processor is configured to interrupt charging of the battery through a charging circuit of the station.

According to an embodiment, the cleaner body further includes a battery processor, and the battery processor is configured to interrupt the electrical connection between the battery and the main processor when the battery is charged to the certain level.

According to an embodiment, after interrupting the electrical connection between the battery and the main processor, the battery processor is configured to control a connection between a power supply device of the station and the main processor to be established through a charging terminal of the station.

According to an embodiment, the battery processor is configured to release the connection between the power supply device of the station and the main processor by using the BEMF generated in the first motor as the wake-up signal and control power supply from the battery to the main processor.

According to an embodiment, the cleaner body further includes a dust bin configured to collect dust, the station further includes a dust suction unit, the second motor driving event is a start input of a dust suction operation by the second motor, and the dust moves from the dust bin of the cleaner body to the dust suction unit of the station through the flow path by the dust suction operation.

According to an embodiment, the cleaner body further includes an inverter configured to drive the first suction motor, the inverter including three legs each including an upper switch and a lower switch, and the main processor is configured to turn on the lower switch of each of the three legs of the inverter configured to drive the first suction motor so as to stop the first motor.

According to an embodiment, the main processor is configured to adjust a duty ratio for turning on the lower switch of each of the three legs of the inverter to control a time taken to stop the first motor.

According to an embodiment, the BEMF is generated in the first motor due to a pressure difference according to the air flow generated in the flow path by the driving of the second motor.

According to an embodiment, the station further includes a pressure sensor configured to sense the pressure difference according to the airflow generated in the flow path.

According to an embodiment, the second motor driving event is at least one of an event in which a user pushes a user input button, an event in which the station receives a control signal through communication from outside of the cordless cleaner device, an event in which a control signal is executed by an internal program of the station, or an event in which the cleaner body is coupled to the station.

According to an embodiment, a control signal that the station receives from the outside of the cordless cleaner device through communication includes a control signal received from at least one of a mobile terminal of a user, a computing device of the user, or a server.

According to an embodiment, the control signal by an internal program of the station includes a control signal executed periodically.

According to an embodiment, the cleaner body is an automatic movable cleaner body, and the event in which the cleaner body is coupled to the station is an event in which the automatic movable cleaner body is docked on and electrically coupled to the station.

According to an embodiment of the disclosure, a method of electrically activating a battery-powered cordless cleaner device includes, by a station processor, detecting a second motor driving event in a station, by the station processor, driving a second motor according to the second motor driving event, rotating a suction fan of a first motor in a cleaner body by a pressure difference generated in a flow path shared between the cleaner body and the station according to the driving of the second motor, waking up a battery processor of the cleaner body by BEMF generated by rotation of the suction fan of the first motor, and by the battery processor, activating a main processor of the cleaner body powered by a battery of the cleaner body.

According to an embodiment, the second motor driving event occurs while an electrical connection between the main processor of the cleaner body and the battery in the cleaner body is interrupted.

According to an embodiment, when the battery is charged to a certain level before the second motor driving event occurs, charging of the battery is interrupted through a charging circuit of the station.

A method according to an embodiment may be implemented in the form of program instructions executable by various computer means and be recorded on a computer-readable recording medium. The computer-readable recording medium may include program instructions, data files, data structures, or the like alone or in combination. The program instructions recorded on the computer-readable recording medium may be program instructions specially designed and configured for the disclosure or program instructions known and available to those of ordinary skill in the field of computer software. Examples of the computer-readable recording medium may include magnetic media such as a hard disk, a floppy disk, and magnetic tape, optical recording media such as compact disc read-only memory (CD-ROM) and a digital versatile disk (DVD), magneto-optical media such as a floptical disk, and hardware devices such as ROM, RAM, and flash memory, which are specially configured to store and execute program instructions. Examples of the program instructions may include machine language code produced by a compiler and high-level language code executable by a computer by using an interpreter or etc.

Some embodiments of the disclosure may be implemented in the form of a recording medium including instructions executable by a computer, such as program modules executed by a computer. The computer-readable recording medium may be any available medium accessible by a computer and includes volatile and non-volatile media and separable and non-separable media. In addition, the computer-readable recording medium may include a computer storage medium and a communication medium. The computer-readable recording medium includes volatile and non-volatile media and separable and non-separable media, which are implemented by any method or technique for storing information, such as computer-readable instructions, data structures, program modules, or other data. The communication medium typically includes computer-readable instructions, data structures, program modules, other data in modulated data signals such as carrier waves, or other transfer mechanisms, and includes any information transfer medium. In addition, some embodiments of the disclosure may be implemented in the form of a computer program or computer program product including instructions executable by a computer, such as a computer program executed by a computer

A device-readable storage medium may be provided in the form of a non-transitory storage medium. In this regard, the term "non-transitory storage medium" simply means that the storage medium is a tangible device and does not include a signal (e.g., an electromagnetic wave), but this term does not differentiate between where data is semi-permanently stored in the storage medium and where the data is temporarily stored in the storage medium. For example, the "non-transitory storage medium" may include a buffer in which data is temporarily stored.

According to an embodiment, the method according to various embodiments disclosed herein may be included and provided in a computer program product. The computer program product may be traded as a commodity between a seller and a buyer. The computer program product may be distributed in the form of a machine-readable storage medium (e.g., CD-ROM), or be distributed (e.g., downloaded or uploaded) online via an application store, or between two user devices (e.g., smartphones) directly. In the case of online distribution, at least a part of the computer program product (e.g., a downloadable app) may be temporarily stored or temporarily generated in a device-readable storage medium, such as a memory of a manufacturer server, an application store server, or a relay server.

## Claims

1. A cordless cleaner device comprising:
a cordlessly powered cleaner body comprising a first motor and a battery configured to supply power to a main processor;
a station comprising a second motor driven based on a second motor driving event, and a station processor configured to control the second motor to be driven according to the second motor driving event; and
a flow path shared by the cleaner body and the station,
wherein back-electro motive force (BEMF) is generated in the first motor by rotation of a suction fan connected to the first motor according to an air flow of the flow path by the driving of the second motor, the main processor is activated by the BEMF, and
the first motor and the second motor each comprise a suction motor.

2. The cordless cleaner device of claim 1, wherein
the cleaner body further includes a battery processor, and
the battery processor is configured to control power supply from the battery to the main processor by using the BEMF generated in the first motor as a wake-up signal.

3. The cordless cleaner device of claim 1 or 2, wherein
the second motor driving event occurs while an electrical connection between the main processor of the cleaner body and the battery in the cleaner body is interrupted.

4. The cordless cleaner device of any one of claims 1 to 3, wherein
the main processor being activated by the BEMF includes
the battery processor configured to control the battery, being activated by the BEMF generated in the first motor, and the activated battery processor activating the main processor of the cleaner body.

5. The cordless cleaner device of any one of claims 1 to 4, wherein
when the battery is charged to a certain level before the second motor driving event occurs, the station processor is configured to interrupt charging of the battery through a charging circuit of the station.

6. The cordless cleaner device of any one of claims 1 to 5, wherein
the cleaner body further includes a battery processor, and
the battery processor is configured to interrupt the electrical connection between the battery and the main processor when the battery is charged to a certain level.

7. The cordless cleaner device of claim 6, wherein
after interrupting the electrical connection between the battery and the main processor, the battery processor is configured to control a connection between a power supply device of the station and the main processor to be established through a charging terminal of the station.

8. The cordless cleaner device of claim 6 or 7, wherein
the battery processor is configured to release the connection between the power supply device of the station and the main processor by using the BEMF generated in the first motor as the wake-up signal and control power supply from the battery to the main processor.

9. The cordless cleaner device of any one of claims 1 to 8, wherein
the cleaner body further includes a dust bin configured to collect dust, the station further includes a dust suction unit,
the second motor driving event is a start input of a dust suction operation by the second motor, and the dust moves from the dust bin of the cleaner body to the dust suction unit of the station through the flow path by the dust suction operation.

10. The cordless cleaner device of any one of claims 1 to 9, wherein
the cleaner body further includes an inverter configured to drive the first suction motor, the inverter including three legs each including an upper switch and a lower switch, and
the main processor is configured to turn on the lower switch of each of the three legs of the inverter configured to drive the first suction motor so as to stop the first motor.

11. The cordless cleaner device of claim 10, wherein
the main processor is configured to adjust a duty ratio for turning on the lower switch of each of the three legs of the inverter to control a time taken to stop the first motor.

12. The cordless cleaner device of any one of claims 1 to 11, wherein
the BEMF is generated in the first motor due to a pressure difference according to the air flow generated in the flow path by the driving of the second motor.

13. The cordless cleaner device of any one of claims 1 to 12, wherein
the station further includes a pressure sensor configured to sense the pressure difference according to the air flow generated in the flow path.

14. The cordless cleaner device of any one of claims 1 to 13, wherein
the second motor driving event is at least one of an event in which a user pushes a user input button, an event in which the station receives a control signal through communication from outside of the cordless cleaner device, an event in which a control signal is executed by an internal program of the station, or an event in which the cleaner body is coupled to the station.

15. The cordless cleaner device of claim 14, wherein
the cleaner body is an automatic movable cleaner body, and
the event in which the cleaner body is coupled to the station is an event in which the automatic movable cleaner body is docked on and electrically coupled to the station.
